(19) Europäisches Patentamt / European Patent Office / Office européen des brevets

(11) **EP 2 582 494 B1**

(12) **FASCICULE DE BREVET EUROPEEN**

(45) Date de publication et mention
de la délivrance du brevet:
**01.07.2015 Bulletin 2015/27**

(51) Int Cl.:
**B25J 9/10** *(2006.01)* **B25J 13/02** *(2006.01)*

(21) Numéro de dépôt: **11724680.1**

(86) Numéro de dépôt international:
**PCT/EP2011/059952**

(22) Date de dépôt: **15.06.2011**

(87) Numéro de publication internationale:
**WO 2011/157757 (22.12.2011 Gazette 2011/51)**

(54) **SYSTEME D'ACTIONNEMENT AVEC REDUCTEUR A GRAND RAPPORT DE REDUCTION, ROBOT ET INTERFACE HAPTIQUE COMPORTANT AU MOINS UN TEL SYSTEME**

ANTRIEBSSYSTEM MIT REDUKTIONSVORRICHTUNG MIT HOHEM REDUKTIONSVERHÄLTNIS, ROBOTER UND HAPTISCHE SCHNITTSTELLE MIT MINDESTENS EINEM DERARTIGEN SYSTEM

ACTUATING SYSTEM WITH REDUCING DEVICE HAVING A HIGH REDUCTION RATIO, ROBOT AND HAPTIC INTERFACE COMPRISING AT LEAST ONE SUCH SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.06.2010 FR 1054823**

(43) Date de publication de la demande:
**24.04.2013 Bulletin 2013/17**

(73) Titulaire: **Commissariat à l'Énergie Atomique et aux Énergies Alternatives
75015 Paris (FR)**

(72) Inventeurs:
• **FERLAY, Fabien**
  **F-26770 Taulignan (FR)**
• **GOSSELIN, Florian**
  **F-92170 Vanves (FR)**

(74) Mandataire: **Ilgart, Jean-Christophe et al
BREVALEX
95, rue d'Amsterdam
75378 Paris Cedex 8 (FR)**

(56) Documents cités:
**EP-A2- 1 629 949     US-A- 5 207 114
US-B1- 6 622 580**

EP 2 582 494 B1

**Description**

**DOMAINE TECHNIQUE ET ART ANTÉRIEUR**

La présente invention se rapporte à un système d'actionnement en rotation comportant un réducteur à grand rapport de réduction, et à un dispositif comportant au moins un tel système, comme un robot ou une interface haptique.

Les robots et interfaces haptiques sont constitués de chaines mécaniques poly-articulées et actionnées, en général par des moteurs électriques. Le plus souvent, des réducteurs sont prévus entre les dispositifs d'actionnement et les éléments actionnés pour amplifier les efforts. Les performances sont directement liées à la qualité des dispositifs d'actionnement, d'amplification et de transmission des efforts.

D'une manière générale, les transmissions mécaniques et les réducteurs posent deux problèmes : la perte d'énergie et le jeu de fonctionnement. Pour les réducteurs, ces phénomènes sont d'autant plus marqués que le rapport de réduction est grand. Ainsi, plus le rapport de réduction augmente, plus le rendement est faible et / ou les jeux importants. Ces phénomènes sont d'autant plus marqués que dans de nombreux cas, on utilise une superposition de réducteurs.

Dans le domaine des robots industriels, il existe des réducteurs, tel que les réducteurs « Harmonic Drive », roue et vis sans fin, ..., qui offrent de grands rapports de réduction sans jeu et avec un rendement acceptable.

Cependant, dans le domaine des interfaces haptiques, on cherche également à avoir un système réversible avec de faibles frottements et un faible jeu, que le réducteur soit attaqué en entrée ou en sortie. Or la plupart des réducteurs existants ne sont pas réversibles. Par exemple, les réducteurs « Harmonic Drive » présentent des frottements importants pour un rapport de réduction élevé.

Des réducteurs spécifiques ont alors été développés pour les interfaces haptiques, par exemple le cabestan à câble. Celui-ci-est composé d'une roue menante et d'une roue menée, un câble reliant les deux roues. Ce type de réducteur permet d'atteindre des rapports de réduction élevés, cependant son encombrement est dans ce cas important.

En effet, le rapport de réduction est directement donné par le rapport entre le diamètre de la roue menée et celui de la roue menante calculés au niveau de la fibre neutre du câble. Or le diamètre de la roue menante est limité par les capacités d'enroulement du câble, celui-ci ne peut typiquement pas être inférieur à 10 mm pour les câbles les plus usuels. Pour obtenir un rapport de réduction élevé, il faut donc augmenter le diamètre de la roue menée, provoquant donc une augmentation de l'encombrement.

Ceci n'est pas une solution envisageable si l'on veut conserver un système compact, ce qui est particulièrement recherché dans le cas des robots et des interfaces haptiques.

Le document US-A-5 207 144 montre un système d'actionnement comportant un réducteur à câble comportant un tambour menant sur lequel s'enroule un premier câble menant relié à une première roue menée. Le rapport des diamètres entre la roue menée et le tambour menant détermine le rapport de réduction. Afin d'augmenter celui-ci, une deuxième étape est prévue avec une seconde roue menée par un second câble entraîné par un tambour coaxial à la première roue menée.

D'autres réducteurs sont utilisés sur certaines interfaces :

- les réducteurs à engrenages, cependant ceux-ci présentent soit du jeu, soit des frottements,
- les réducteurs à moufle, cependant leur rapport de réduction est limité. Ils sont de plus de réalisations complexes et relativement encombrants,
- les réducteurs à courroie n'offrent qu'un rapport de réduction en général assez faible,
- les réducteurs à vis à billes sont de réalisations complexes.

C'est par conséquent un but de la présente invention d'offrir un système d'actionnement en rotation comportant un réducteur réversible apte à présenter un grand rapport de réduction et de réalisation simple.

**EXPOSÉ DE L'INVENTION**

Dans ce document, le terme réa désignera une poulie avantageusement à gorge en rotation dans une chape mobile. Le terme tambour désignera une poulie de grande largeur sur laquelle un câble est enroulé, et avantageusement guidé lors de son enroulement et de son déroulement pas une empreinte en spirale sur cette poulie, ou une poulie de plus faible largeur sur laquelle une courroie est enroulée, et avantageusement guidée lors de son enroulement et de son déroulement pas une empreinte négative de la courroie sur cette poulie. Par ailleurs on pourra utiliser le terme roue pour désigner une poulie.

Le but précédemment énoncé est atteint par un système d'actionnement en rotation selon la revendication 1.

Grâce à un tel système, on peut atteindre un grand rapport de réduction. En outre, le réducteur est réversible, présente des frottements réduits et est de réalisation simple.

En d'autres termes, le réducteur du système selon la présente invention comporte deux systèmes différentiels à câble ou courroie en opposition reliés par un câble secondaire entrainant une poulie menée. Chaque système différentiel à câble ou courroie comporte un réa supporté par une chape déplacée principalement en translation, ce réa tournant en fonction des mouvements d'un câble ou d'une courroie primaire dont la longueur libre varie. Pour faire varier la longueur libre de ce câble, respectivement de cette courroie, le câble, respectivement la courroie, est enroulé(e) sur deux tambours synchronisés : le premier déroule du câble, respectivement la courroie, pendant que le second l'enroule. Il est alors possible d'imposer des longueurs d'enroulement et de déroulement différentes afin que la longueur totale de la portion libre du câble, respectivement de la courroie, varie et que le réa soit mis en mouvement en utilisant deux diamètres de tambours différents et/ou en faisant tourner les tambours à des vitesses différentes.

Le réducteur du système selon l'invention peut être réversible, puisque l'entrée et la sortie du réducteur peuvent être inversées.

De manière avantageuse, il permet de diminuer les masses en mouvement, puisque les câbles et courroies présentent une inertie faible. De plus, les frottements sont faibles et le rendement du système est élevé.

En outre, le système n'est composé que de pièces simples. Par ailleurs, le système est relativement compact.

De manière avantageuse, si on utilise un câble menant, les tambours menants comportent un filetage pour guider le câble menant.

De manière avantageuse, si on utilise une courroie, les tambours menants comportent une empreinte négative de la courroie guidant la courroie.

Ce type de réducteur peut également être utilisé pour actionner un axe situé au-delà d'un premier axe de rotation. Dans ce cas, de manière avantageuse, le câble mené est guidé par des poulies de renvoi de sorte à passer le long ou à proximité dudit premier axe de rotation autour duquel une chape supportant la roue menée peut tourner.

Selon une caractéristique supplémentaire de l'invention, le moteur est pourvu d'un capteur de position angulaire.

La présente invention a également pour objet un robot ou une interface haptique comportant au moins un système d'actionnement selon la présente invention et des moyens de commandes des moteurs.

Le robot ou l'interface haptique selon la présente invention peut avantageusement comporter deux mécanismes en parallèles et un moteur d'actionnement monté en série avec lesdits deux mécanismes.

La présente invention a également pour objet un robot ou une interface haptique comportant au moins un système d'actionnement selon la présente invention sur lequel on modifie à l'aide du contrôleur du robot le rapport de réduction en le diminuant à des moments donnés par exemple pour pouvoir déplacer l'effecteur à grande vitesse, par exemple lors des phases d'approche, et en l'augmentant à des moments donnés pour pouvoir par exemple appliquer des efforts importants avec l'effecteur, par exemple lors de phases de travail.

## BRÈVE DESCRIPTION DES DESSINS

La présente invention sera mieux comprise à l'aide de la description qui va suivre et des dessins en annexe sur lesquels :

- la figure 1A est une vue en perspective d'un dispositif intégrant un exemple de réalisation d'un système selon la présente invention,
- la figure 1B est une seconde vue en perspective du dispositif de la figure 1A,
- les figures 2A et 2B sont des vues en perspective du dispositif des figures 1A et 1B dans différentes positions,
- les figures 3A et 3B sont des vues en perspective d'un second exemple de réalisation d'un dispositif intégrant un système selon la présente invention,
- la figure 4 est une vue en perspective d'une réalisation industrielle du système des figures 3A et 3B complet,
- les figures 5A à 5D sont des vues de côté, d'arrière, de face et de dessus du système de la figure 4,
- la figure 6 est une vue de détail de la zone de fixation entre le membre allongé et la roue menée,
- la figure 7 est une vue d'un exemple de réalisation d'un robot comportant deux systèmes selon la présente invention,
- la figura 8 est un schéma de principe d'une variante du système des figures 1A et 1B,
- les figures 9A à 9F sont d'autres exemples de réalisation de l'accrochage du câble sur les tambours menants, les deux tambours ayant des axes de rotation distincts,
- la figure 10 est une variante du réducteur de la figure 9A, dans laquelle les axes de rotation des tambours sont confondus,
- la figure 11A est une vue en perspective d'un autre exemple de réalisation d'un dispositif intégrant un système selon la présente invention, dans lequel les mouvements des tambours sont transmis aux réas par une courroie,
- la figure 11B est une vue en perspective d'une variante du dispositif de la figure 11A.

## EXPOSÉ DÉTAILLÉ DE MODES DE RÉALISATION PARTICULIERS

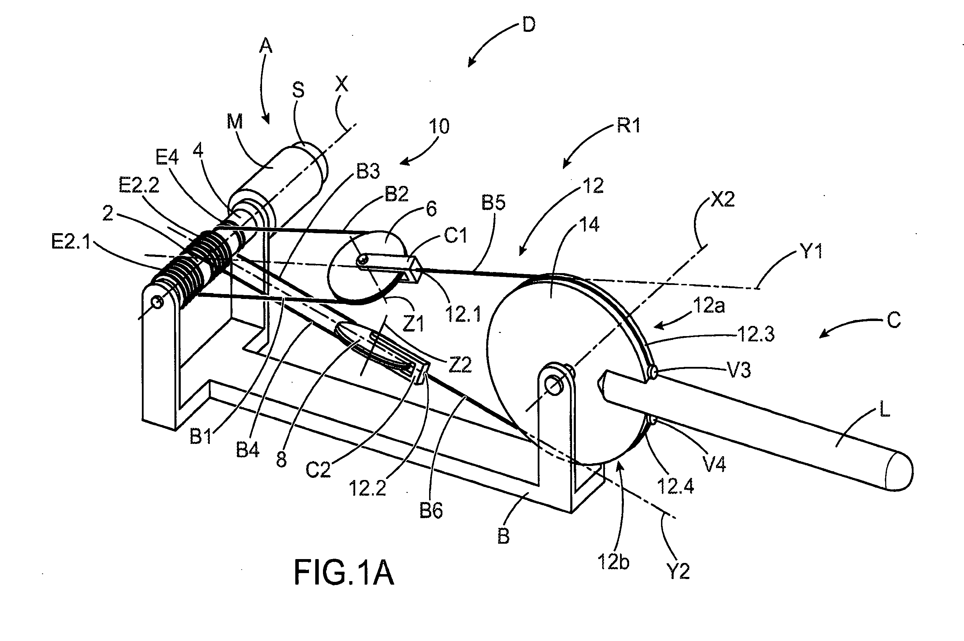

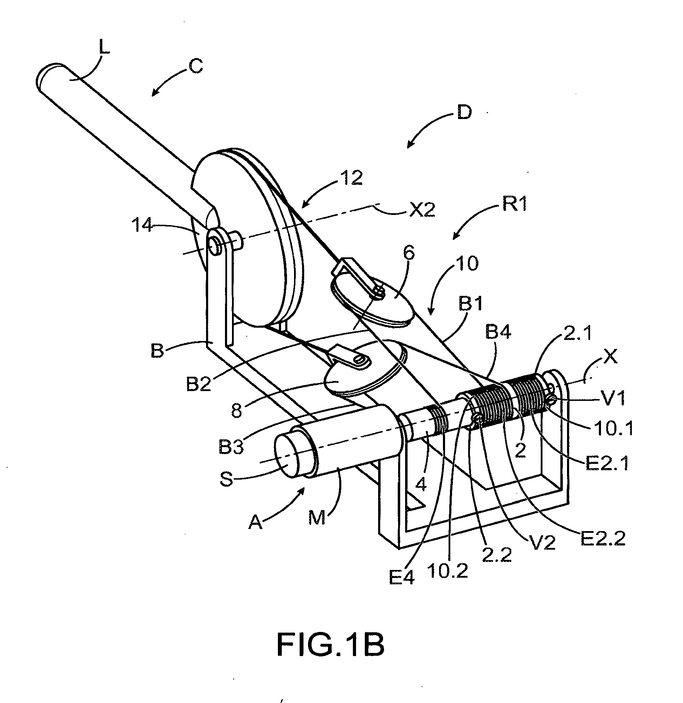

Sur les figures 1A et 1B, on peut voir une vue en perspective d'un dispositif D comportant un exemple de réalisation d'un réducteur différentiel R1 particulièrement adapté à des robots et interfaces haptiques.

Le réducteur R1 comporte un premier 2 et un deuxième 4 tambour menants solidaires en rotation autour d'un axe X et de diamètres différents et aptes à tourner autour de l'axe X par rapport à une pièce de base B. A des fins de simplicité, les tambours menants seront désignés par « tambours » uniquement.

Dans l'exemple représenté, le premier tambour 2 présente un diamètre D1 supérieur au diamètre D2 du deuxième tambour 4. Le réducteur R1 comporte également un premier 6 et un deuxième réa 8, et un câble 10 cheminant du premier tambour au premier réa, au deuxième tambour, au deuxième réa 8 et au premier tambour 2.

Dans l'exemple représenté, un seul câble 10 chemine entre les tambours et les réas, ce qui permet de ne réaliser que deux accrochages sur le premier tambour 2 et de réduire la longueur du deuxième tambour 4, mais il est bien entendu que des câbles distincts pourraient être utilisés pour relier chaque réa 6, 8 aux deux tambours 2, 4.

Dans l'exemple représenté, le câble 10 est accroché par une première extrémité 10.1 à une extrémité longitudinale 2.1 du premier tambour et par une deuxième extrémité 10.2 à une deuxième extrémité longitudinale 2.2 du premier tambour. Dans l'exemple représenté, ces fixations sont réalisées par pincement du câble 10 par les vis V1 et V2. Tout autre dispositif de fixation des extrémités du câble pourrait bien sûr également être utilisé. Il pourrait s'agir, par exemple et de manière non exhaustive, de sertissages ou de noeuds placés aux extrémités du câble et bloqués dans des logements du tambour 2 ou encore de rainures en V dans lesquelles les extrémités du câble viennent se coincer.

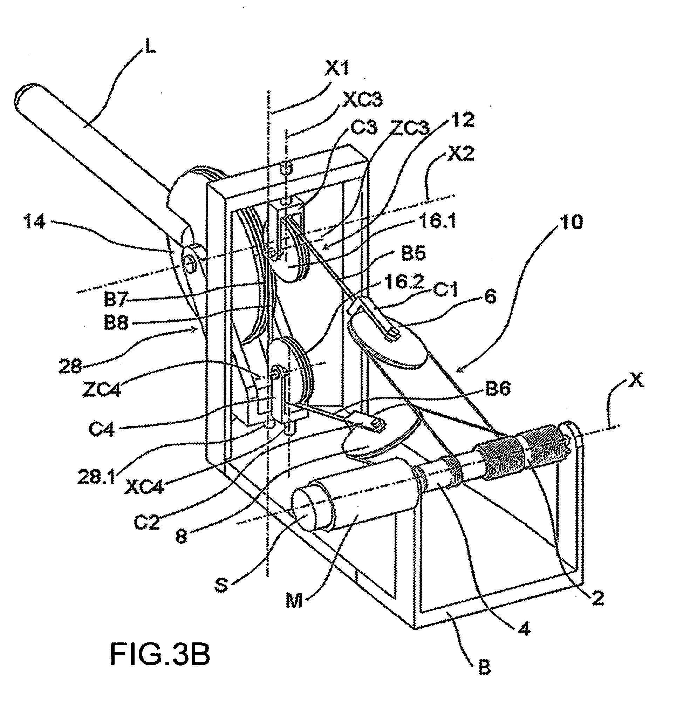

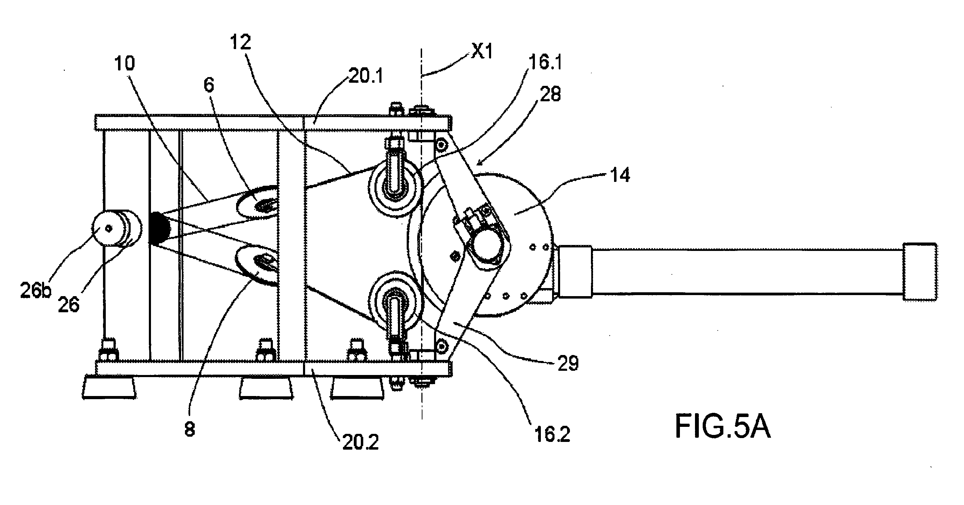

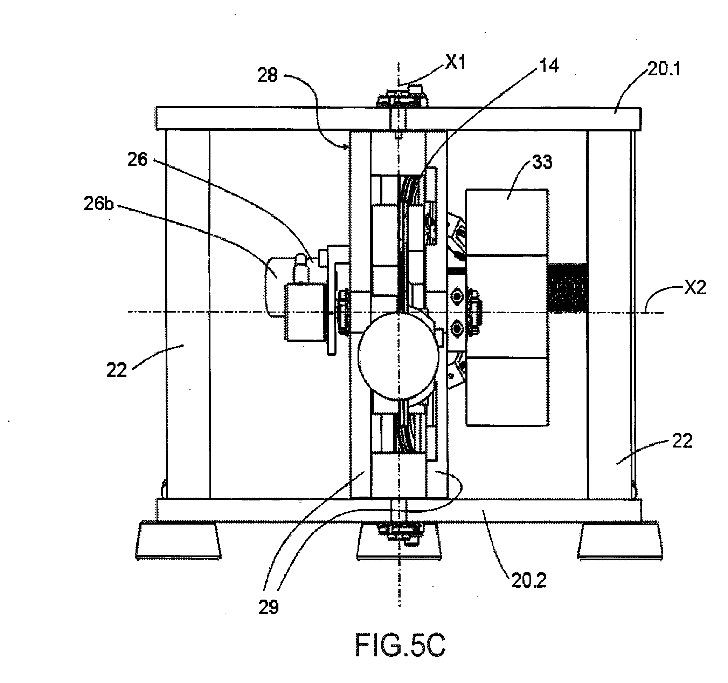

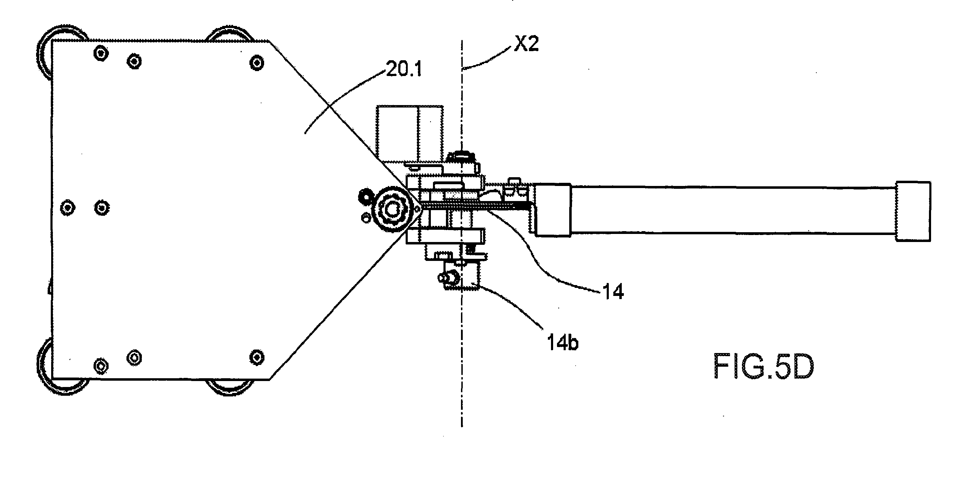

De manière avantageuse, les tambours menants 2, 4 comprennent un filetage pour guider le câble 10, ce qui améliore la fiabilité du réducteur en évitant que plusieurs spires se croisent ou se superposent. Sur les figures 1A, 1B, 2A, 2B, 3A, 3B, 4, 7, 8, 9A à 9F et 10, ce filetage n'est pas représenté pour améliorer la lisibilité des figures. Il est représenté sur les figures 5A à 5D. Par ailleurs, les figures 1A, 2A, 2B, 9A à 9F et 10 font apparaître un pas d'enroulement du ou des brins de câble 10, 110, 110' sur les tambours 2, 102 et 4, 104 important afin d'améliorer encore la lisibilité des figures. Le pas d'enroulement des câbles sur les tambours sera avantageusement choisi le plus faible possible, comme cela apparaît sur les figures 1B et 3B, de telle sorte que la longueur des tambours soit minimisée, deux spires successives de câble étant alors très proches, quasi-jointives ou jointives.

Le réducteur R1 comporte aussi un second câble 12. Dans l'exemple représenté, le câble 12 comprend deux brins distincts 12a et 12b mais un seul câble pourrait être utilisé sous réserve que les extrémités 12.3 et 12.4 soient reliées entre elles.

Le dispositif D est pourvu d'un dispositif d'actionnement A et d'un corps C mobile en rotation autour de l'axe X2 par rapport à la base B. Le dispositif A comporte un moteur M dont le stator pourra être avantageusement fixé sur la base B et le rotor rendu solidaire des tambours 2 et 4. Le corps C comporte notamment un segment L et une poulie menée 14 à laquelle le câble 12 ou les brins de câble 12a et 12b sont attachés. La présence du segment L n'est pas obligatoire et la poulie 14 peut être utilisée directement en sortie du mécanisme sans sortir du cadre de l'invention.

Les brins 12a et 12b du câble 12 sont reliés à leurs autres extrémités 12.1 et 12.2 à des chapes C1 et C2 supportant les réas 6 et 8. Le déplacement linéaires des chapes provoque le déplacement du câble 12 qui entraîne en rotation la roue menée 14.

L'ensemble constitué du câble 10, des réas 6, 8, des chapes C1, C2 et du câble 12 transmet ainsi le mouvement des tambours menants 2, 4 à la poulie menée 14.

Le moteur M peut être utilisé pour entrainer le segment L via le réducteur R1 sur un robot ou une interface haptique ou pour résister toujours via le réducteur R1 aux mouvements de l'utilisateur lorsque celui-ci déplace le segment L. Cette résistance pourra avantageusement être fonction des interactions dans un environnement virtuel qu'il pilote si le dispositif est une interface haptique ou des interactions d'un robot qu'il commande avec l'environnement distant si le dispositif est un bras maître pour la téléopération ou avec l'environnement proche si le dispositif est un robot collaboratif. Le moteur M est avantageusement équipé d'un capteur de position S permettant de mesurer ses mouvements et d'asservir ses déplacements ou ses efforts moteurs ou résistants aux signaux de commande en provenance de la simulation ou de son contrôleur.

Il est bien entendu que le moteur M peut être de tout type adapté, comme par exemple un moteur électrique à courant continu, un moteur synchrone autopiloté, un moteur asynchrone, un moteur piézo-électrique ou encore un actionneur pneumatique, hydraulique ou à base d'alliages à mémoire de formes (AMF). On peut encore utiliser à la place du moteur M et pour opposer une résistance aux mouvements de l'utilisateur un système freinant, comme par exemple un frein à poudre, un frein à fluides électro ou magnéto rhéologiques ou un frein à disques, à tambours ou à patins. Ces deux types de solutions peuvent encore être combinés, le moteur M étant alors remplacé par un ensemble composé d'un moteur et d'un frein. Ce type d'association est connu de l'homme de l'art et ne sera pas détaillé ici. Il est également entendu que le dispositif S de mesure des mouvements du moteur M peut être de tout type adapté, comme par exemple un codeur optique, un potentiomètre, un capteur à effet Hall ou un capteur magnéto-optique.

Le dispositif D pourrait bien sûr être équipé de plusieurs capteurs de position. La rotation de la poulie 14 par rapport à la base B pourrait par exemple être mesurée par un second capteur de position, de même que la rotation des réas 6 et 8 ou la position des chapes C1 et C2.

Le dispositif D pourrait aussi être muni d'un ou plusieurs capteurs d'effort pour asservir plus finement les efforts du moteur M en fonction des signaux de commande. Ce ou ces capteurs pourraient par exemple et de manière non exhaustive être disposés entre le moteur M et les tambours 2, 4, au niveau de l'axe des réas 6 et 8, au niveau de l'accroche du câble 12 sur les chapes C1 et C2 ou encore entre la base B et la poulie 14 au niveau de l'axe X2.

Le câble 10 comporte une première portion E2.1 au niveau de sa première extrémité 10.1 enroulée autour du premier tambour 2, un brin B1 s'étendant entre le premier tambour 2 et le premier réa 6, un deuxième brin B2 s'étendant entre le premier réa et le deuxième tambour 4, une portion médiane E4 enroulée autour du deuxième tambour 4, un troisième brin B3 s'étendant entre le deuxième tambour 4 et le deuxième réa 8, un quatrième brin B4 s'étendant entre le deuxième réa 8 et le premier tambour 2 et une troisième portion E2.2 au niveau de sa deuxième extrémité 10.2 enroulée autour du premier tambour 2.

Comme on peut le voir, dans l'exemple de réalisation représenté, les filetages sur les tambours 2 et 4 ont le même sens d'enroulement et le câble 10 chemine entre les tambours 2, 4 et les réas 6, 8 de telle sorte que les premier et deuxième brins B1, B2 soient disposés en quinconce par rapport aux troisième et quatrième brins B3, B4.

Ce réducteur R1 présente l'avantage d'éviter toute collision ou croisement des brins de câbles.

Toute autre configuration des filetages, en particulier avec des sens d'enroulement différents sur les tambours 2 et 4, est également possible et ne sort pas du cadre de l'invention. Dans ce cas, les brins de câble B1 à B4 ne seront pas forcément disposés dans le même ordre que sur les figures 1A et 1B.

Nous allons maintenant expliquer le fonctionnement du réducteur R1 selon la présente invention.

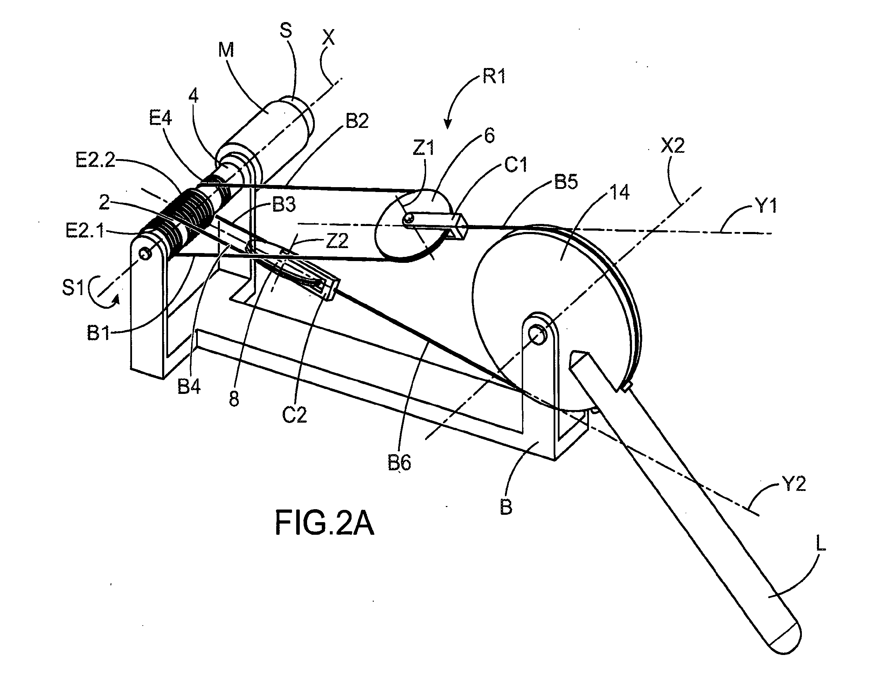

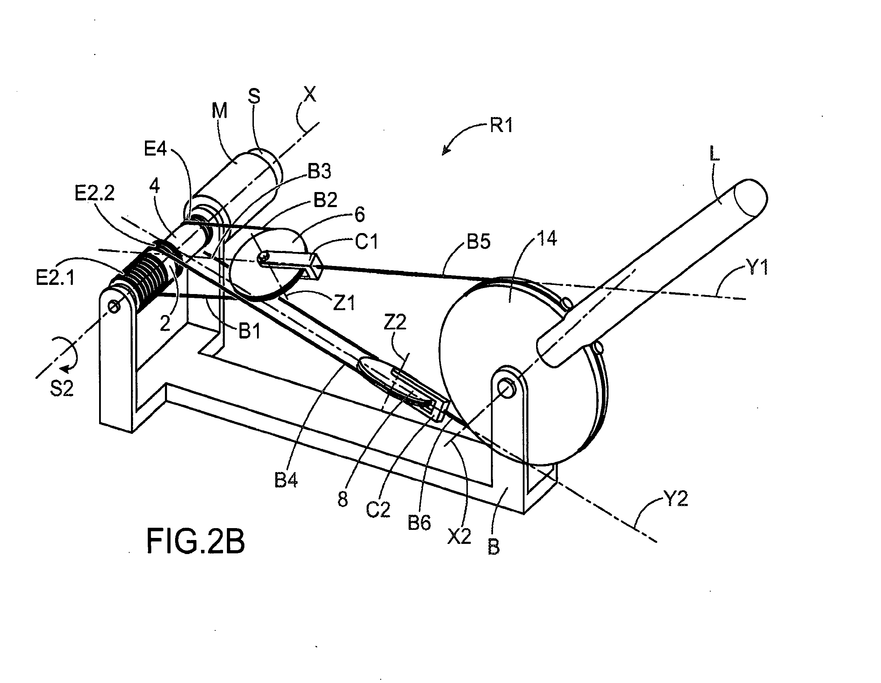

Les figures 2A et 2B présentent le dispositif des figures 1A et 1B dans des configurations différentes. Lorsque les tambours 2, 4 tournent dans un sens donné, le câble 10 se déroule du deuxième tambour 4 et s'enroule sur le premier tambour 2. Or, les tambours 2, 4 n'ayant pas le même diamètre, la longueur totale de câble située entre les tambours 2 et 4 varie.

Si par exemple les tambours sont entrainés dans le sens S1, la portion de câble comprenant les brins B3 et B4 se déroule du tambour 4 et s'enroule sur le tambour 2 de diamètre supérieur, donc sa longueur diminue et les brins de câble B3 et B4 raccourcissent, provoquant un rapprochement du second réa 8 de l'axe X des tambours 2, 4 le long de l'axe Y2. Ce mouvement est accompagné d'une rotation du réa 8 par rapport à la chape C2 autour de l'axe Z2. Le brin de câble 12b étant lié à son extrémité 12.2 à la chape C2 supportant le réa 8 et à son extrémité 12.4 à la roue menée 14, ce mouvement est transmis à la roue menée 14 qui est mise en rotation autour de l'axe X2. Le membre L solidaire de la poulie 14 est ainsi mis en mouvement vers le bas. La portion de câble comprenant les brins B1 et B2 au contraire se déroule du tambour 2 et s'enroule sur le tambour 4 de diamètre inférieur. Par conséquent sa longueur augmente et les brins B1 et B2 de câble s'allongent. Le brin de câble 12a étant lié à son extrémité 12.3 à la roue menée 14 et à son extrémité 12.1 à la chape C1 supportant le réa 6, la rotation de la poulie 14 autour de l'axe X2 provoque l'éloignement du premier réa 6 de l'axe X le long de l'axe Y1 au fur et à mesure que les brins B1 et B2 s'allongent. Ce mouvement est accompagné d'une rotation du réa 6 par rapport à la chape C1 autour de l'axe Z1.

Si, au contraire, les tambours sont entrainés dans le sens S2, la portion de câble comprenant les brins B1 et B2 se déroule du tambour 4 et s'enroule sur le tambour 2 de diamètre supérieur et les brins B1 et B2 de câble se raccourcissent, provoquant le rapprochement du premier réa 6 de l'axe X. Le brin de câble 12a transmet ce mouvement à la roue menée 14 qui est mise en rotation autour de l'axe X2, entraînant le membre L vers le haut. La portion de câble comprenant les brins B3 et B4, quant à elle, se déroule du tambour 2 et s'enroule sur le tambour 4 de diamètre inférieur et les brins de câble B3 et B4 s'allongent. La rotation de la poulie 14 autour de l'axe X2 est transmise à la chape C2 par le brin de câble 12b et provoque un éloignement du réa 8 de l'axe X le long de l'axe Y2 au fur et à mesure que les brins B3 et B4 s'allongent.

Si on considère le réducteur R1 avec les deux réas 6, 8, la rotation des tambours provoque le déplacement des deux réas chacun principalement le long d'un des axes distincts Y1 et Y2 en combinaison avec un déplacement plus limité suivant la direction de l'axe X, l'un se rapprochant de l'axe X de rotation des tambours et l'autre s'éloignant de l'axe X. Puisque les extrémités 12.1, 12.2 du câble 12 sont solidaires des chapes C1, C2, et que ses extrémités 12.3 et 12.4 sont solidaires de la poulie 14, ce mouvement provoque la mise en rotation de la poulie 14 autour de l'axe X2. Le membre L solidaire de la poulie 14 est ainsi mis en mouvement.

Le sens de rotation de la roue menée dépend du sens de déplacement des réas le long des axes Y1 et Y2 et donc du sens de rotation des tambours. Ainsi, lorsque les tambours 2, 4 sont déplacés dans le sens S1, le corps L est déplacé vers le bas et le brin libre de câble B5 compris entre la chape C1 et la poulie 14 se raccourcit tandis que le brin libre de câble B6 compris entre la poulie 14 et la chape C2 s'allonge. Au contraire, lorsque les tambours 2, 4 sont déplacés dans le sens S2, le corps L est déplacé vers le haut et le brin de câble B5 s'allonge tandis que le brin de câble B6 se raccourcit.

Sur l'exemple représenté, les brins de câble 12a, 12b sont attachés à leur extrémité 12.3, 12.4 à la poulie 14 par des vis V3, V4 venant bloquer le câble. Tout autre moyen de blocage pourrait être utilisé.

Il est à noter que les chapes C1, C2 se déplacent principalement dans la direction d'allongement Y1, Y2 des brins du câble 12 auxquels elles sont liées mais elles subissent aussi un mouvement transversal lié à l'avancement du câble 10 sur les tambours menants 2, 4 lorsqu'ils sont mus en rotation ainsi qu'éventuellement un mouvement de rotation autour de l'axe principal des brins du câble 12 si les dimensions des réas ne sont pas optimisées.

Ainsi, on constate que, lorsque les tambours sont entraînés dans le sens S1, l'enroulement E2.1 diminue tandis que l'enroulement E2.2 s'allonge et que l'enroulement E4 s'éloigne du moteur M. Au contraire lorsque les tambours sont entraînés dans le sens S2, l'enroulement E2.1 s'allonge tandis que l'enroulement E2.2 diminue et que l'enroulement E4 se rapproche du moteur M. Ainsi l'enroulement spiralé du câble 10 sur les tambours 2, 4 conduit au déplacement des points de sortie des brins de câble B1, B2, B3, B4 des tambours le long de l'axe X lorsque les tambours 2, 4 sont entraînés en rotation. Les câbles 10 et 12 étant tendus entre les tambours 2, 4 et les réas 6, 8, respectivement entre les chapes C1, C2 et la poulie 14, les angles entre l'axe X et les axes Y1, Y2 varient légèrement au cours du mouvement pour s'adapter à ce déplacement. Les tambours 2, 4 sont alors avantageusement disposés à une distance suffisante de l'axe X2 pour que l'angle entre l'axe X et les brins de câble B1, B2, B3, B4 reste proche de $\pi/2$ pour éviter que le câble ne s'échappe des filets (représentés sur les figures 5A à 5D). En outre les réas 6, 8 et la poulie 14 sont avantageusement rainurés pour assurer un bon guidage des câbles 10, 12 et éviter que ceux-ci ne s'en échappent. Pour augmenter la lisibilité des figures, ces rainures ne sont représentées que de manière schématique sur les figures 1 à 4. Elles apparaissent sur les figures 5A à 5D.

Le rapport de réduction du réducteur selon la présente invention peut s'écrire :

$$R = \frac{2 \times r_{poulie.menée}}{(r_1 - r_2)}$$

Avec R rapport de réduction, $r_{poulie\ menée}$ : rayon de la roue menée calculé à la fibre neutre du câble 12,
$r_1$ : rayon du tambour de plus grand diamètre calculé à la fibre neutre du câble 10,
$r_2$ : rayon du tambour de plus petit diamètre calculé à la fibre neutre du câble 10.

A titre d'exemple, pour une roue menée de diamètre 100 mm, un premier tambour de diamètre 20,28 mm et un deuxième tambour de diamètre 17 mm, on obtient un rapport de réduction R proche de 61. On obtient ainsi un rapport de réduction très important dans un volume raisonnable. En outre le réducteur R1 est réversible. Ainsi lorsque l'utilisateur déplace le corps L vers le bas, cela entraine un mouvement des tambours 2, 4 dans le sens S1 par l'intermédiaire du câble 12, des chapes C1, C2, des réas 6, 8 et du câble 10, mouvement mesuré par le capteur S et auquel le moteur M peut s'opposer. De la même manière, lorsque l'utilisateur déplace le corps L vers le haut, cela entraine un mouvement des tambours 2, 4 dans le sens S2.

Sur l'exemple de réalisation représenté, les filetages sont de même sens sur les tambours 2, 4 mais ils pourraient également être de sens opposé. Par ailleurs, dans l'exemple représenté le diamètre du réa 6 sera avantageusement choisi égal à

$$\sqrt{(r_1 + r_2)^2 + d_{12x}^2}$$

où $d_{12x}$ désigne la distance entre la projection sur l'axe X du point de sortie du brin de câble B1 du tambour 2 et la projection sur l'axe X du point d'entrée du brin de câble B2 sur le tambour 4. Dans ces conditions l'axe Z1 subit principalement un mouvement de translation et le réa 6 ne subit pas de rotation autour de l'axe Y1, ce qui diminue les risques de collision avec les câbles environnants. De la même manière, le diamètre du réa 8 sera avantageusement choisi égal à

$$\sqrt{(r_1 + r_2)^2 + d_{34x}^2}$$

où $d_{34x}$ désigne la distance entre la projection sur l'axe X du point de sortie du brin de câble B3 du tambour 4 et la projection sur l'axe X du point d'entrée du brin de câble B4 sur le tambour 2. Dans ces conditions l'axe Z2 subit principalement un mouvement de translation et le réa 8 ne subit pas de rotation autour de l'axe Y2, ce qui diminue les risques de collision avec les câbles environnants. De manière encore plus avantageuse, on choisira de laisser un nombre de spires mort entre le point de sortie du brin B1 du tambour 2 et le point d'entrée du brin B4 sur le tambour 2 sensiblement égal au nombre de spires en prise de l'enroulement E4. Les spires des tambours 2 et 4 auront également de manière préférentielle un pas identique. Ainsi les distances $d_{12x}$ et $d_{34x}$ sont égales et les réas peuvent être de même diamètre.

Dans l'exemple représenté, le tambour 2 a un diamètre supérieur au tambour 4. Ce pourrait aussi être le tambour 4 qui a un diamètre supérieur au tambour 2. Les tambours 2 et 4 pourraient encore avoir des diamètres égaux, sous réserve qu'ils aient des vitesses de rotation différentes. Ils pourraient pour cela être désolidarisés et entraînés via des transmissions ou des réducteurs de rapports de réduction égaux, opposés, ou différents placés entre le moteur M et les tambours 2, 4 ou au moins l'un d'entre eux. On pourrait encore combiner des tambours de diamètres différents avec des vitesses d'entrainement différentes de ces tambours. On pourrait aussi utiliser des transmissions ou des réducteurs de rapport de réduction variable, comme par exemple des boites de vitesse ou des variateurs à courroie, entre le moteur M et au moins l'un des tambours 2, 4, pour modifier le rapport de synchronisation entre les deux tambours donc le rapport de réduction en cours d'utilisation. Ces deux types de dispositifs sont connus de l'homme de l'art et ne seront pas détaillés ici. Par ailleurs ils ne sont cités qu'à titre d'exemples et tout autre dispositif permettant de modifier de façon continue ou discrète la vitesse de rotation de l'un des tambours 2, 4 au moins pourrait être utilisé sans sortir du cadre de l'invention. Le pilotage de cette modification du rapport de synchronisation entre les deux tambours sera par exemple assuré par le contrôleur du robot ou de l'interface haptique. On peut ainsi avantageusement adapter la différence de vitesse d'enroulement et de déroulement des brins B1 et B2, respectivement B3 et B4, et donc le rapport de réduction, aux conditions rencontrées. Toute solution assurant un allongement des brins B1 et B2 coordonné avec un raccourcissement des brins B3 et B4 entre dans le cadre de cette invention.

La modification du rapport de réduction en cours d'utilisation permet d'ajuster la vitesse de déplacement de l'effecteur ou sa facilité de mise en mouvement. Cela permet également d'ajuster la capacité du dispositif à appliquer des efforts ou à résister à des efforts appliqués par l'utilisateur sur le robot ou l'interface haptique. Ainsi, sur un robot, on pourra par exemple décroître le rapport de réduction lorsque l'on veut déplacer l'effecteur à grande vitesse (phases d'approche) et l'augmenter lorsque l'on veut appliquer des efforts importants (phases de travail). De la même façon, sur une interface haptique ou un bras maître pour la téléopération, on pourra par exemple diminuer le rapport de réduction en espace libre pour accroître la réversibilité et la transparence du système et l'accroître lorsque l'on veut résister aux mouvements de l'utilisateur, jusqu'à le bloquer complètement en implémentant un rapport de réduction infini. Enfin, sur un robot collaboratif, on pourra par exemple diminuer le rapport de réduction pour accroître la réversibilité et la transparence du système en dehors des phases d'assistance et l'accroître lorsque l'on veut appliquer des efforts importants (phases d'assistance à l'utilisateur).

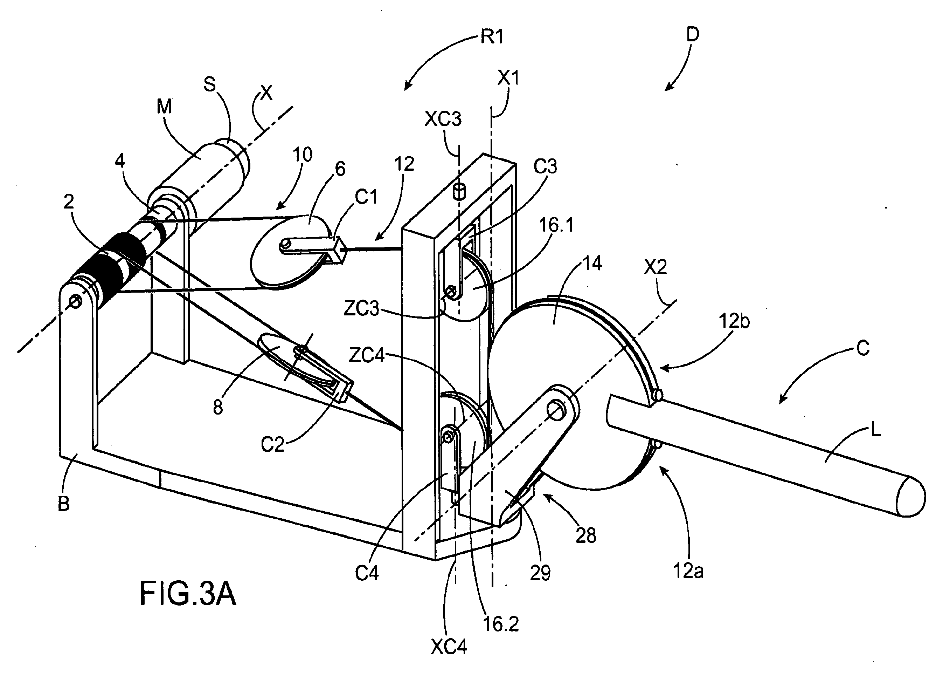

Les figures 3A et 3B présentent un second exemple de dispositif intégrant un réducteur selon la présente invention. Sur ce dispositif, le corps C composé notamment de la poulie 14 et du segment L est monté en rotation autour de l'axe X2 sur une chape 28 apte à tourner au niveau de son extrémité 28.1 autour d'un axe X1 par rapport à la base B du dispositif. La chape 28 peut comprendre avantageusement deux pièces 29 disposées de chaque côté de la poulie 14 pour assurer un bon guidage de celle-ci en rotation. Ce dispositif intègre encore des poulies de renvoi 16.1, 16.2 destinées à guider les brins 12a et 12b du câble 12 entre les chapes C1, C2 et la poulie 14. Le brin de câble 12a est attaché à la chape C1, il comprend ensuite un premier brin libre B5, chemine sur la poulie 16.1, comprend un second brin libre B7 puis est enroulé sur la poulie 14 à laquelle il est attaché à son autre extrémité. De la même façon, le brin de câble 12b est attaché à la chape C2, il comprend ensuite un premier brin libre B6, chemine sur la poulie 16.2, comprend un second brin libre B8 puis est enroulé sur la poulie 14 à laquelle il est attaché à son autre extrémité. Les portions de câble B7 et B8 passent avantageusement le long ou à proximité de l'axe X1. Ainsi lorsque les corps 28, C tournent autour de l'axe X1 les brins de câble 12a, 12b vrillent le long de cet axe mais leur longueur ne varie presque pas. Par conséquent ce mouvement autour de l'axe X1 n'introduit pas de mouvement parasite autour de l'axe X2 et les mouvements autour des axes X1 et X2 sont découplés.

De manière avantageuse, les brins B7 et B8 sont légèrement décalés pour ne pas entrer en collision ou frotter entre eux. La poulie 14 est alors avantageusement pourvue de deux rainures parallèles destinées à guider les brins de câble 12a, 12b.

Les poulies 16.1, 16.2 sont mobiles en rotation autour d'axes ZC3, ZC4. Elles peuvent également être montées sur des chapes C3, C4. Ces chapes C3, C4 pourront avantageusement être mobiles en rotation autour d'axes XC3, XC4 et en translation le long des axes XC3, XC4 par rapport à la base B. La mobilité en rotation permet d'ajuster l'angle des poulies autour des axes XC3, XC4 de telle sorte que les brins de câble B5, B6 soient dans le plan des poulies 16.1, 16.2, ce qui minimise les frottements du câble 12 sur les flancs des poulies. Cet angle pourra être réglé avant utilisation par exemple pour que les frottements soient minimisés au centre de l'espace de travail.

Cette rotation pourra aussi être laissée libre tout au long du fonctionnement du système pour que les frottements soient minimisés quelle que soit la configuration du système. Dans l'exemple représenté, les axes XC3 et ZC3, respectivement XC4 et ZC4, sont sécants, ce qui permet d'utiliser des chapes droites simples. Par contre les axes X1 et XC3, respectivement X1 et XC4 sont distincts. On pourrait aussi utiliser des chapes coudées sur lesquelles les axes XC3 et ZC3, respectivement XC4 et ZC4, ne sont pas concourants, et aligner les axes X1 et XC3, respectivement X1 et XC4.

Cette solution permettrait de faire en sorte que les poulies 16.1, 16.2 s'alignent automatiquement avec les brins de câbles B5, B6. Ce type de dispositif est connu de l'homme de l'art et ne sera pas détaillé. La mobilité en translation des chapes C3, C4 peut avantageusement être utilisée pour tendre les câbles.

Le fonctionnement du réducteur composé des tambours 2, 4, des réas 6, 8, des chapes C1, C2 et des câbles 10, 12 est identique à celui du réducteur des figures 1A, 1B, 2A, 2B. Le sens d'actionnement est en revanche opposé du fait du croisement des brins de câbles 12a et 12b entre les chapes C1, C2 et la poulie 14.

Comme ceux des figure 1A et 1B, les tambours 2, 4 des figures 3A et 3B pourraient être désolidarisés, l'un d'entre eux au moins étant entrainé par une transmission ou un réducteur placé entre lui et le moteur M. Le rapport de synchronisation entre les deux tambours pourrait ici aussi être égal à 1 ou -1, différent de 1 ou -1 ou variable et dans ce dernier cas être avantageusement piloté par le contrôleur du robot ou de l'interface haptique.

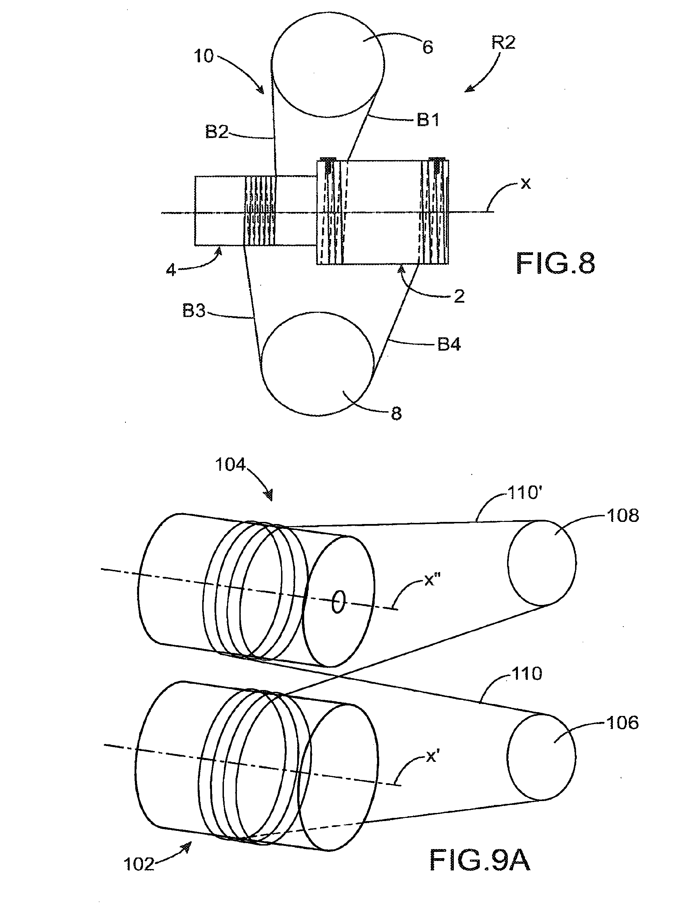

Sur la figure 8, on peut voir une variante R2 du réducteur R1 des figures 1A et 3A, dans lequel l'accrochage du câble 10 est modifié par rapport à celui des figures 1A et 3A.

Dans cette variante, les brins B1 et B2 du premier réa 6 sont situés à l'intérieur des brins B3 et B4 du deuxième réa 8. De préférence, dans cette variante de réalisation les premier et deuxième réas présentent des diamètres différents, ce qui permet d'obtenir des brins de câbles B1 et B2, respectivement B3 et B4 parallèles.

Sur les figures 9A à 9F, on peut voir d'autres exemples de réalisation d'un réducteur selon la présente invention représentés de manière schématique. Par souci de lisibilité, seuls les tambours menants, les réas et le câble primaire sont représentés sur ces figures. Les autres éléments sont semblables à ceux des figures précédentes.

Dans ces exemples, les deux tambours 102, 104 ont chacun un axe de rotation X', X" distincts.

Par exemple afin de synchroniser la rotation des deux tambours, l'un des tambours est entraîné directement par un moteur électrique, par exemple en étant monté directement sur son arbre, et l'autre tambour est entraîné indirectement par exemple par une courroie ou un engrenage.

On peut également prévoir que les deux tambours soient entraînés par le même moteur au moyen d'un primaire monté sur l'arbre du moteur et d'un engrenage sur chacun des axes des tambours ou par une courroie entrainant chacun d'eux. Dans ces cas les deux tambours tournent dans le même sens.

On peut également prévoir de remplacer la ou les courroie (s) par un ou des train (s) d'engrenages et dans ce cas les deux tambours tournent dans le même sens ou en sens opposés suivant le nombre et la disposition des engrenages du ou des train(s).

On peut enfin prévoir de remplacer le ou les train(s) d'engrenages par un ou des réducteur(s) variable(s) comme par exemple et de manière non exhaustive des boites de vitesse ou des réducteurs variables à courroies. La modification du rapport de réduction de ce ou ces réducteur(s) placé(s) entre le moteur et le ou les tambour (s) permet de modifier le rapport de réduction du réducteur R1 en cours d'utilisation. Cette modification pourra être effectuée manuellement. Elle pourra aussi avantageusement être automatisée et pilotée par le contrôleur du robot ou de l'interface haptique.

Les deux tambours peuvent soit présenter des diamètres différents, soit avoir des vitesses de rotation différentes, soient avoir à la fois de diamètres différents et des vitesses de rotation différentes.

La mise en oeuvre de tambours séparés permet de réaliser un réducteur plus compact dans le sens de l'axe X.

Sur les figures 9A à 9F, le premier tambour 102 a un diamètre supérieur à celui du deuxième tambour 104. Il est bien entendu que l'on pourrait prévoir un premier tambour dont le diamètre serait inférieur à celui du deuxième tambour ou des tambours de mêmes diamètres entrainés à des vitesses différentes.

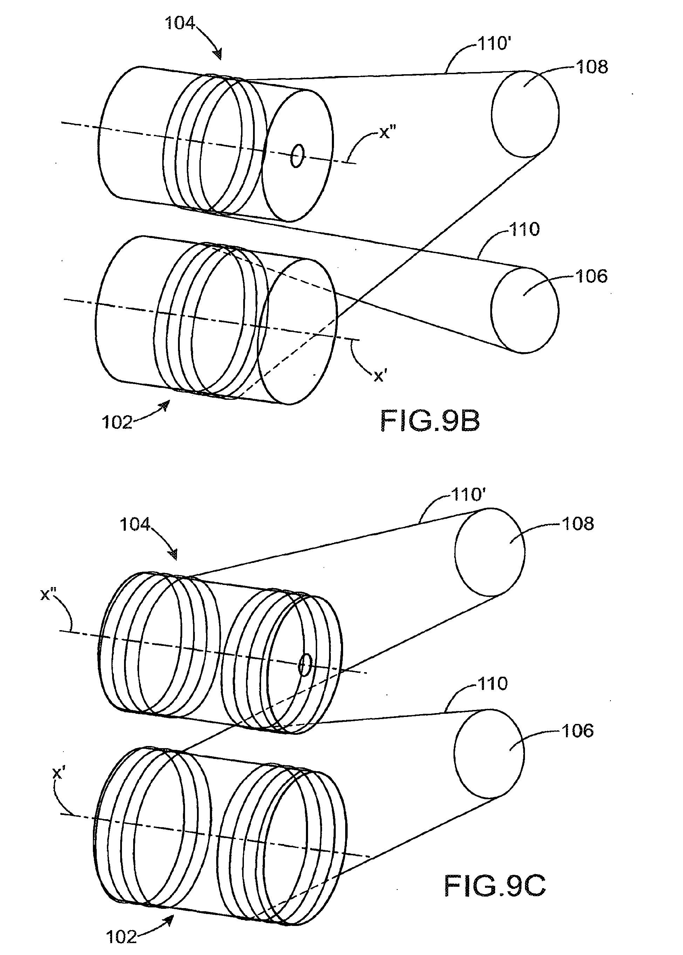

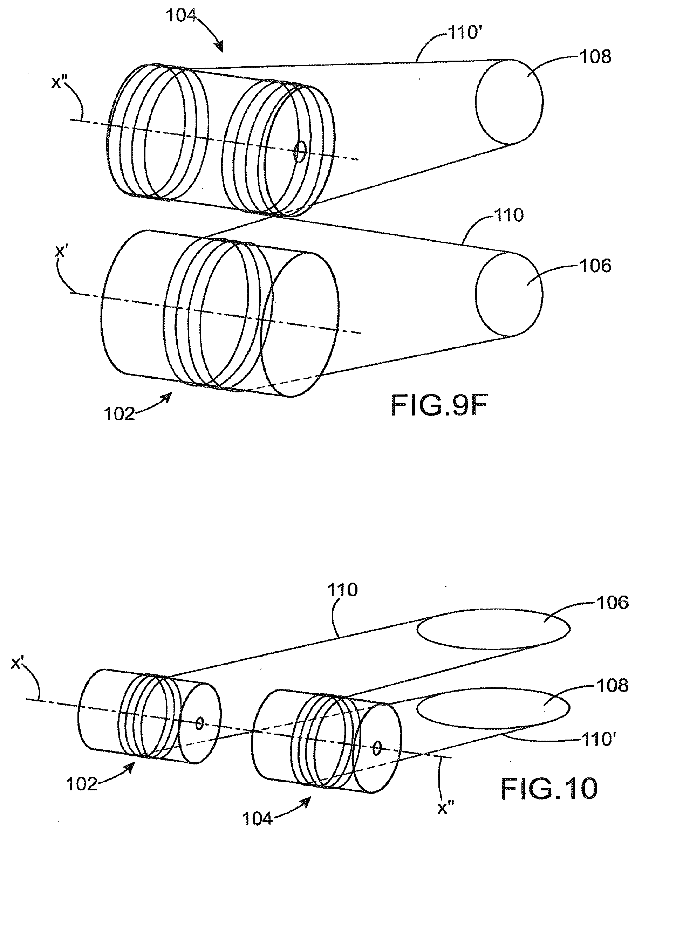

Sur la figure 9A, les deux tambours présentent des filetages identiques, chaque réa 106, 108 est entouré par un câble 110, 110' enroulé autour de la zone centrale des tambours 102, 104. Sur l'exemple représenté sur la figure 9A, le câble 110, 110' présente une boucle continue, ce qui peut être obtenu par exemple en sertissant ensemble les deux extrémités du câble. Il entraine ou est alors entraîné par les tambours 102, 104 par friction du câble sur ceux-ci. L'un ou l'autre des brins 110, 110' ou les deux pourraient aussi être fixés sur l'un ou l'autre des tambours 102, 104, ou sur les deux, par exemple à l'aide d'une vis bloquant le câble avantageusement à proximité du centre des enroulements sur les tambours 102, 104. Cette remarque vaut aussi pour les autres modes de réalisation illustrés par les figures 9B à 9F et 10.

Dans cet exemple, les tambours tournent en sens opposés et les enroulements du câble 110, 110' sur les tambours 102 et 104 se déplacent en sens opposés le long des axes X', X" lorsque le dispositif est mis en marche.

Les filetages des deux tambours pourraient également avantageusement être opposés, sans sortir du cadre de l'invention. Dans ce cas les tambours tourneraient toujours en sens opposés mais les enroulements du câble 110, 110' sur les tambours 102 et 104 se déplaceraient dans le même sens le long des axes X', X" lorsque le dispositif est mis en marche.

Sur la figure 9B, les filetages des deux tambours sont opposés, chaque réa 106, 108 est entouré par un câble 110, 110' fixé dans la zone centrale des tambours 102, 104. Dans cet exemple, les tambours tournent dans le même sens et les enroulements du câble 110, 110' sur les tambours 102 et 104 se déplacent en sens opposés le long des axes X', X" lorsque le dispositif est mis en marche.

Les filetages des deux tambours pourraient également avantageusement être identiques. Dans ce cas les tambours tourneraient toujours dans le même sens mais les enroulements du câble 110, 110' sur les tambours 102 et 104 se déplaceraient dans le même sens le long des axes X', X" lorsque le dispositif est mis en marche.

Sur la figure 9C, les deux tambours présentent des filetages identiques, chaque réa 106, 108 est entouré par un câble 110, 110' fixé par ses extrémités aux extrémités longitudinales de chacun des tambours 102, 104. Dans cet exemple, les tambours tournent en sens opposés. Les extrémités longitudinales auxquelles chaque câble 110, 110' est fixé sont situées du même côté par rapport à un plan médian des tambours.

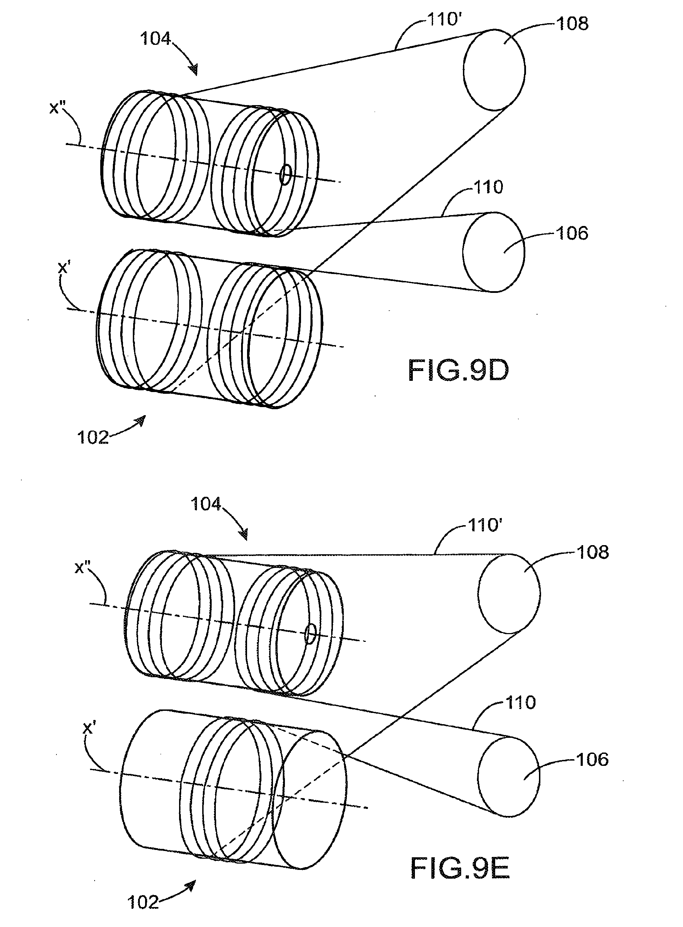

Sur la figure 9D, les filetages des deux tambours sont opposés, chaque réa 106, 108 est entouré par un câble 110, 110' fixé par ses extrémités aux extrémités longitudinales de chacun des tambours 102, 104. Dans cet exemple, les tambours tournent dans le même sens. Les extrémités longitudinales auxquelles chaque câble 110, 110' est fixé sont situées du même côté par rapport à un plan médian des tambours.

Sur la figure 9E, les deux tambours présentent des filetages identiques. Le premier réa 106 est entouré par un câble 110 fixé par une de ses extrémités à une première extrémité longitudinale du deuxième tambour 104 et enroulé au niveau de la zone médiane du premier tambour 102. Le deuxième réa 108 est entouré par un câble 110' fixé par une de ses extrémités à une deuxième extrémité longitudinale du deuxième tambour 104 opposée à la première extrémité longitudinale, et enroulé au niveau de la zone médiane du premier tambour 102. Dans cet exemple, les tambours tournent dans le même sens. Le câble 110, 110' peut être formé d'un unique brin de câble. Dans ce cas on pourra soit le fixer sur le tambour 102 soit entraîner le tambour par frottement du câble sur celui-ci. Le câble 110, 110' peut aussi être formé de deux brins de câble fixés chacun sur le tambour 102.

Sur la figure 9F, les deux tambours présentent des filetages opposés. Le premier réa 106 est entouré par un câble 110 fixé par une de ses extrémités à une première extrémité longitudinale du deuxième tambour 104 et à une zone médiane du premier tambour 102. Le deuxième réa 108 est entouré par un câble 110' fixé par une de ses extrémités à une deuxième extrémité longitudinale du deuxième tambour 104 opposée à la première extrémité longitudinale et à la zone médiane du premier tambour 102. Dans cet exemple, les tambours tournent dans des sens opposés.

Dans les exemples de réalisation représentés, les axes X', X" sont parallèles. Ils pourraient également être disposés suivant un angle quelconque dans l'espace, par exemple pour faciliter l'intégration du dispositif, moyennant l'utilisation de moyens de renvoi d'angle adaptés tel que des courroies ou des engrenages coniques par exemple.

Il est bien entendu que l'ensemble des exemples présentés sur les figures 9A à 9F pourrait être adapté dans le cas où les axes des tambours 102, 104 sont alignés, que les tambours soient solidarisés ou non. Ainsi le câble 10 des dispositifs des figures 1A et 3A pourrait par exemple être attaché au centre des deux tambours 2, 4 avec des filetages en sens opposés ou identiques ou sur les bords des deux tambours 2, 4 avec des filetages en sens opposés.

Sur la figure 10, on peut voir encore une autre variante de réalisation très proche du réducteur de la figure 9A, dans laquelle les deux tambours 102, 104 sont distincts et leurs axes X', X" de rotation sont alignés. Par exemple, l'entraînement des deux tambours est obtenu par un seul moteur et un différentiel disposé entre les deux tambours. Le différentiel, qui est bien connu de l'homme de l'art et non représenté par soucis de clarté, comporte par exemple un engrenage conique en sortie de l'arbre du moteur et un engrenage conique monté sur chaque axe d'un tambour. Les deux tambours tournent alors en sens inverses.

Toutes les configurations représentées sur les figures 9A à 9F sont applicables à la variante de la figure 10.

Toutes les configurations des figures 9A à 9F et 10 sont par ailleurs compatibles avec une utilisation dans le cadre des dispositifs des figures 1A et 3A.

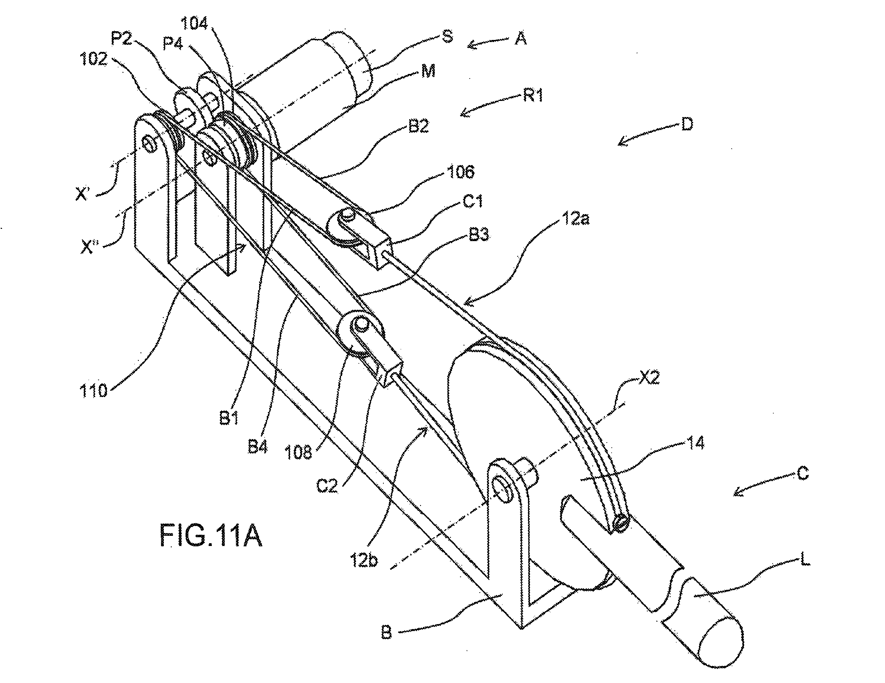

La figure 11A présente un autre exemple de réalisation d'un dispositif D intégrant un réducteur R1 selon la présente invention. Sur ce dispositif, le réducteur R1 comporte une courroie 110 composée d'une première portion qui s'enroule sur le tambour 102 mobile en rotation par rapport à la base autour de l'axe X', un premier brin libre B1 allant du premier tambour 102 au premier réa 106, une portion qui s'enroule sur le réa 106, un second brin libre B2 allant du réa 106 au second tambour 104 mobile en rotation autour d'un axe X" avantageusement parallèle à l'axe X', une portion qui s'enroule sur le tambour 104, un troisième brin libre B3 allant du tambour 104 au second réa 108, une portion qui s'enroule sur le réa 108 et un quatrième brin libre B4 allant du réa 108 au premier tambour 102. La courroie 110 forme une boucle fermée.

La courroie 110 peut être de section ronde, trapézoïdale, carrée, rectangulaire, ou de toute autre section de courroie existante, à picots d'entrainement ou non. La figure 11A illustre le cas d'une courroie de section ronde. Les tambours 102 et 104 ainsi qu'éventuellement les réas 6 et 8 peuvent avantageusement être munis de gorges pour guider la courroie et d'encoches pour faciliter son accroche et empêcher qu'elle ne dérape. Ces gorges seront ainsi avantageusement usinées suivant l'empreinte négative de la courroie.

Sur l'exemple représenté sur la figure 11A, les axes X', X" et X2 sont parallèles et les diamètres des tambours 102 et 104 sont choisis de telle sorte que les plans tangents au tambour 102 et à la poulie 14 soient confondus avec les plans tangents au tambour 104 et à la poulie 14. Dans ces conditions les réa 106 et 108 restent dans ces plans et ne tournent pas autour des axes des brins de câble 12a et 12b, ce qui limite le vrillage des brins libres de la courroie.

Le dispositif D est également muni d'un moteur M équipé d'un capteur de position S qui peuvent être et de manière non exhaustive de tous les types présentés précédemment. Le tambour 104 peut être avantageusement lié au rotor du moteur M dont le stator peut être fixé sur le bâti B. Sur l'exemple de la figure 11A, une poulie P4 est montée sur le rotor du moteur M solidaire en rotation avec le tambour 104 autour de l'axe X". Une seconde poulie P2 est montée sur l'axe du tambour 102 solidaire en rotation avec le tambour 102 autour de l'axe X'. Les poulies P4 et P2 permettent de transmettre les mouvements et les efforts du moteur M au tambour 102, de sorte que les tambours 102, 104 aient des sens de rotation opposés. Le moteur M permet ainsi d'entraîner les tambours 102 et 104 ou de résister à leurs mouvements. Sur l'exemple représenté, le moteur M est lié directement au tambour 104 et indirectement au tambour 102 mais cela pourrait être l'inverse. Le moteur M pourrait également être lié aux deux tambours par des moyens de transmission ou des réducteurs. Sur l'exemple représenté, les poulies P2 et P4 ont le même diamètre et les tambours 102 et 104 tournent en sens inverse à la même vitesse autour des axes X' et X". Sur cet exemple, le tambour 102 a un diamètre inférieur au tambour 104 mais cela pourrait aussi bien être l'inverse. Les poulies P2 et P4 pourraient également avoir des diamètres différents, les tambours 102 et 104 ayant dans ce cas des diamètres identiques ou différents. Les poulies P2 et P4 sont par exemple reliées par une courroie, ou sont formés par des galets frottants, ou un train d'engrenages, de rapport de réduction fixe ou variable et avantageusement piloté par le contrôleur du dispositif D. Les autres éléments du dispositif de la figure 11A sont semblables à ceux de la figure 1A et ne seront pas détaillés ici.

Le fonctionnement est semblable à celui du dispositif de la figure 1A. Lorsque le moteur M est piloté en rotation, la différence de diamètre entre les tambours 102 et 104 et / ou leur différence de vitesse provoque un allongement (un raccourcissement) de la portion de la courroie 110 comportant les brins libre B1 et B2 simultanément à un raccourcissement (un allongement) de la portion de courroie comportant les brins libres B3 et B4. Le réa 106 s'éloigne (se rapproche) alors des axes X' et X" tandis que le réa 108 s'en rapproche (s'en éloigne). Les chapes C1 et C2 supportant les réas 6 et 8 étant reliées à la roue menée 14 par les portions de câbles 12a et 12b, ce mouvement provoque la rotation de la roue menée 14 autour de l'axe X2.

Inversement, le système étant réversible, toute rotation de la roue menée 14 est transmise par le câble 12 aux chapes C1 et C2 qui sont entraînées en translation le long des axes des brins de câble 12a et 12b. Ce mouvement est transmis par le câble 110 aux tambours 102 et 104 qui entrainent le moteur M en rotation autour de l'axe X".

L'enroulement de la courroie 110 autour des tambours 102, 104 et des réas 106, 108, est avantageusement inférieur à 1 tour, de telle sorte que les brins libres B1, B2, B3, B4 ne se croisent pas. La gorge ou l'empreinte guidant la courroie sur les tambours et les réas peut alors avantageusement être torique et non hélicoïdale. Dans ces conditions, la courroie n'avance pas le long des axes X' et X" lorsque les tambours 102, 104 tournent autour de ces axes. La longueur de la courroie est donc constante, de même que sa tension, qui peut par exemple être réglée à l'aide d'un système de réglage placé au niveau de l'accroche du câble 12 sur les chapes C1 et C2. Un tel système de tension est bien connu de l'homme de l'art et ne sera pas détaillé ici. Par ailleurs, dans ces conditions, le moteur M peut faire un nombre infini de tours sans que cela soit gênant pour le système. Cette solution est donc particulièrement adaptée pour de très grands rapports de réduction pour lesquels le moteur fait un très grand nombre de tours par rapport à la roue menée.

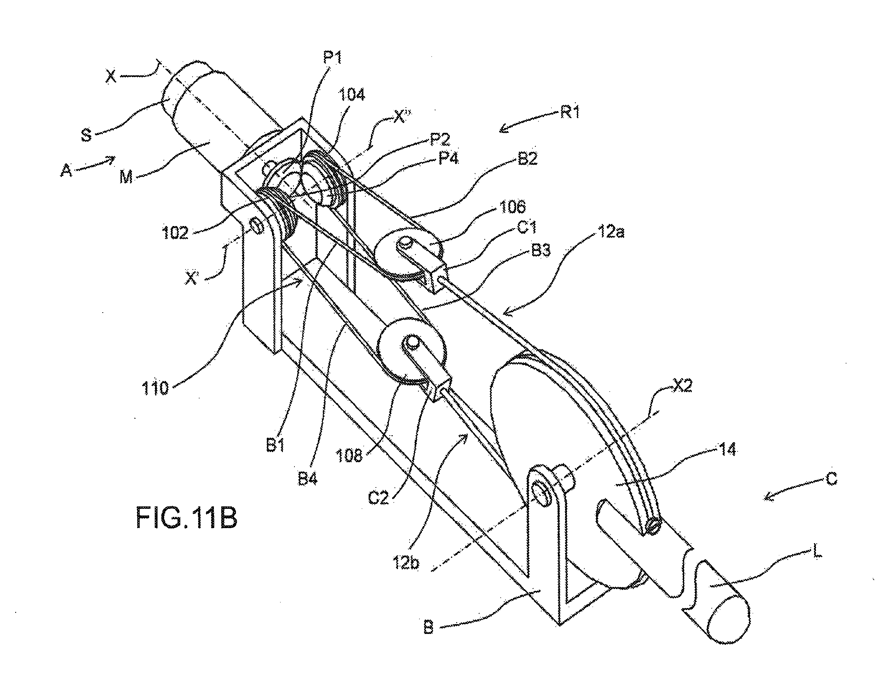

La figure 11B présente une variante de réalisation du dispositif de la figure 11A. Sur ce dispositif, le moteur M est monté à l'arrière des tambours 2 et 4 et tourne autour d'un axe X. Cette disposition n'est donnée qu'à titre d'exemple et le moteur pourrait aussi par exemple être disposé sous les axes X' et X". Son rotor est lié à une poulie conique P1 tandis que son stator est avantageusement fixé sur le bâti B. Le tambour 102 est solidaire en rotation d'une poulie conique P2 tournant en même temps que lui autour de l'axe X'. De la même manière, le tambour 104 est solidaire en rotation d'une poulie conique P4 tournant en même temps que lui autour de l'axe X".

L'ensemble constitué des poulies P1, P2 et P4 constitue un différentiel qui permet d'entraîner les tambours 102 et 104 ou de résister à leur mouvement avec le moteur M. Le fonctionnement de ce dispositif est semblable à celui du système de la figure 11A.

Sur l'exemple représenté sur la figure 11B, les poulies P1, P2 et P4 sont identiques et les tambours 102 et 104 ont des diamètres différents. Les tambours 102 et 104 pourraient également avoir le même diamètre. Dans ce cas, les poulies P2 et P4 auraient des diamètres différents. Il serait encore possible que les poulies P2 et P4 ainsi que les tambours 102 et 104 aient des diamètres différents. Les poulies P1, P2 et P4 peuvent par exemple être des engrenages ou des galets coniques.

Les dispositifs des figures 11A et 11B ne sont donnés qu'à titre d'exemples de réducteur à grand rapport de réduction à courroie et câble secondaire.

Toute autre configuration des poulies P1, P2, P4 ou des moyens de transmission ou de réduction prenant leur place, des tambours 102, 104, et de l'actionneur A entre dans le cadre de cette invention, sous réserve que le mouvement du moteur M provoque un allongement (un raccourcissement) des brins B1 et B2 simultanément à un raccourcissement (un allongement) des brins B3 et B4 entrainant une variation de sens opposé de la distance entre les réas 106 et 108 et les axes X' et X" et une mise en mouvement de la poulie menée 14 par l'intermédiaire du câble secondaire 12.

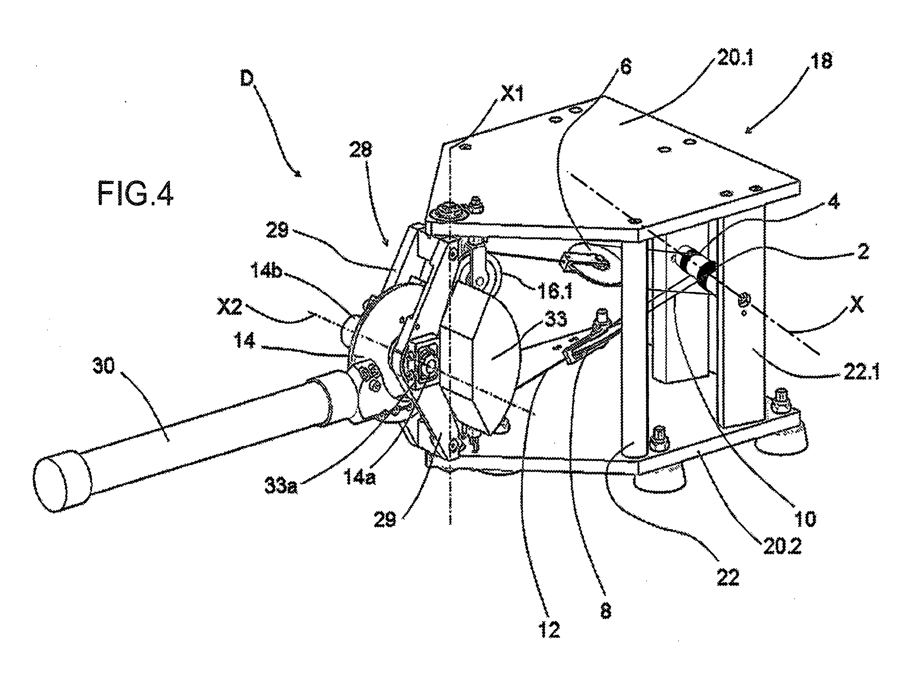

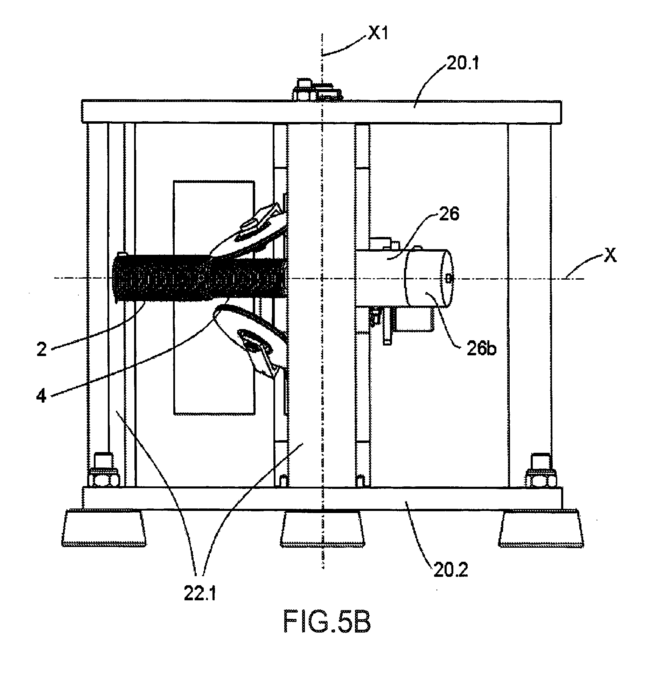

Sur la figure 4 et 5A à 5D, on peut voir un exemple de réalisation industriel d'un dispositif D intégrant un réducteur selon la présente invention, le réducteur étant du type représenté sur les figures 3A et 3B. Les câbles ne sont pas représentés sur les figures 5B à 5D. La structure de la figure 4 est particulièrement adaptée à la réalisation d'un robot ou d'une interface haptique comme nous le verrons par la suite.

La structure du dispositif D de la figure 4 comporte un châssis 18 sur lequel sont montés les éléments du réducteur.

Le châssis 18 comporte une plaque supérieure 20.1 et une plaque inférieure 20.2 sensiblement parallèles reliées rigidement par des tiges 22. Dans l'exemple représenté, les plaques ont la forme de pentagones.

Dans l'exemple représenté, deux montants 22.1 forment les supports en rotation pour les tambours 2, 4 particulièrement visibles sur la vue arrière de la figure 5B. Dans cet exemple, les tambours 2, 4 sont solidaires en rotation et en prise directe avec l'arbre d'un moteur 26 qui est situé de l'autre côté d'un montant 22.1 par rapport aux tambours. Le moteur 26 est équipé d'un capteur de position angulaire 26b permettant de mesurer la rotation des tambours 2, 4.

Les premier et deuxième réas 6, 8 ainsi que leurs chapes sont situés entre les deux plaques 20.1, 20.2. Une poulie de renvoi 16.1 est fixée par l'intermédiaire de sa chape à la plaque supérieure 20.1, et l'autre poulie de renvoi 16.2 est fixée par l'intermédiaire de sa chape à la plaque inférieure 20.2.

La roue menée 14 est montée mobile en rotation autour de son axe X2 sur une chape 28 elle-même mobile en rotation par rapport à la base autour d'un axe X1 avantageusement perpendiculaire à l'axe X2 et s'étendant verticalement sur les figures 5A à 5C. La chape 28 est montée articulée entre la plaque inférieure et la plaque supérieure. Dans l'exemple représenté, la chape est situé au niveau d'une pointe des pentagones à l'opposée des montants 22.1.

La chape 28 comporte deux pièces 29 montées en rotation sur les plaques supérieure 20.1 et inférieure 20.2 autour de l'axe X1. Des paliers sont avantageusement prévus au niveau de l'articulation d'axe X1 entre la chape 28 et les plaques 20.1, 20.2 et au niveau de l'articulation d'axe X2 entre la chape 28 et la roue menée 14.

Dans l'exemple représenté, une pièce allongée 30 est fixée sur la roue menée 14 de sorte à être entraînée en rotation autour de l'axe X2 par rotation de la roue menée 14 et autour de l'axe X1 par rotation de la chape 28. Cette pièce allongée 30 peut former un bras d'un robot ou d'une interface haptique.

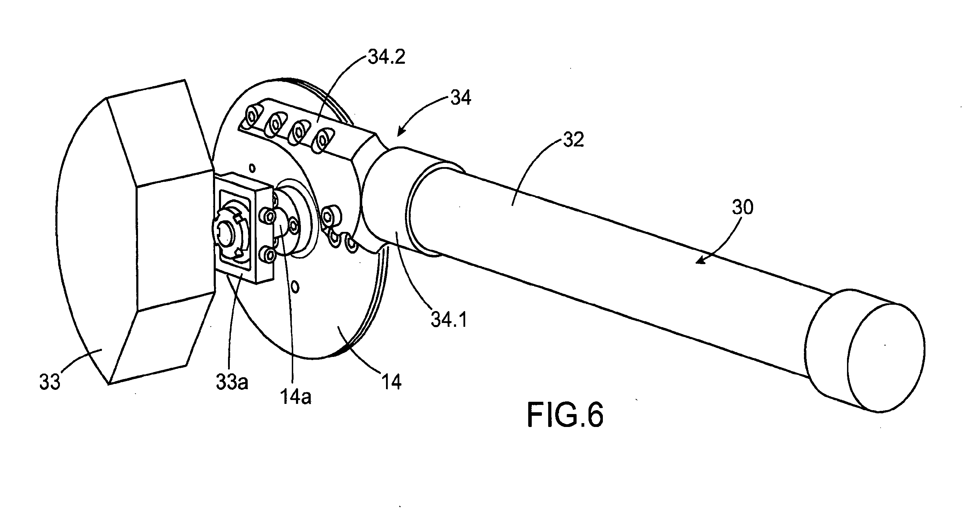

Sur la figure 6, on peut voir un exemple de fixation de la pièce allongée 30 sur la roue menée 14.

Par exemple, la pièce allongée 30 comprend un tube 32 et un élément de raccordement 34 dans lequel est montée une extrémité longitudinale du tube 32.

L'élément de raccordement 34 présente une première partie tubulaire 34.1 pour recevoir le tube et une deuxième partie désaxée 34.2 par rapport à l'axe du tube, cette deuxième partie est destinée à être fixée sur la roue menée 14. Cette réalisation présente l'avantage de permettre une fixation sur le flanc de la roue menée sans gêner le déplacement de la roue menée et sans mettre en oeuvre de chape. Il est bien entendu qu'une solidarisation en rotation de la pièce allongée 30 à la roue menée 14 au moyen d'une chape ne sort pas du cadre de la présente invention.

Dans l'exemple représenté, la deuxième partie 34.2 a une forme effilée.

Dans l'exemple représenté, l'élément de raccordement est fixé sur la roue menée par six vis.

Le tube 32 est par exemple en carbone et l'élément de raccordement est en aluminium.

Il est bien entendu que l'on pourrait prévoir d'autres moyens pour fixer le bras sur la poulie.

Un contrepoids 33 est prévu sur la roue menée 14 pour assurer l'équilibrage statique de l'ensemble des pièces mobiles autour de l'axe X2. Ce contrepoids est fixé sur un arbre 14a solidaire de la poulie 14 et est mobile en rotation par rapport au corps 28 en même temps que la poulie 14. Une pièce 33a est utilisée pour fixer le contrepoids 33 sur l'arbre 14a.

Cette pièce permet de régler la position du contrepoids par rapport à l'arbre afin d'équilibrer le bras. Le contrepoids est ensuite bloqué dans la position souhaitée.

Dans l'exemple représenté, un second capteur de position angulaire 14b est placé entre une des pièces 29 et l'arbre 14a de la poulie 14 de manière à mesurer sa rotation autour de l'axe X2. Ce capteur, non obligatoire, fournit des mesures complémentaires sur l'état du système et peut permettre par exemple de mesurer et / ou de compenser en partie les défauts liés à la souplesse des câbles 10, 12.

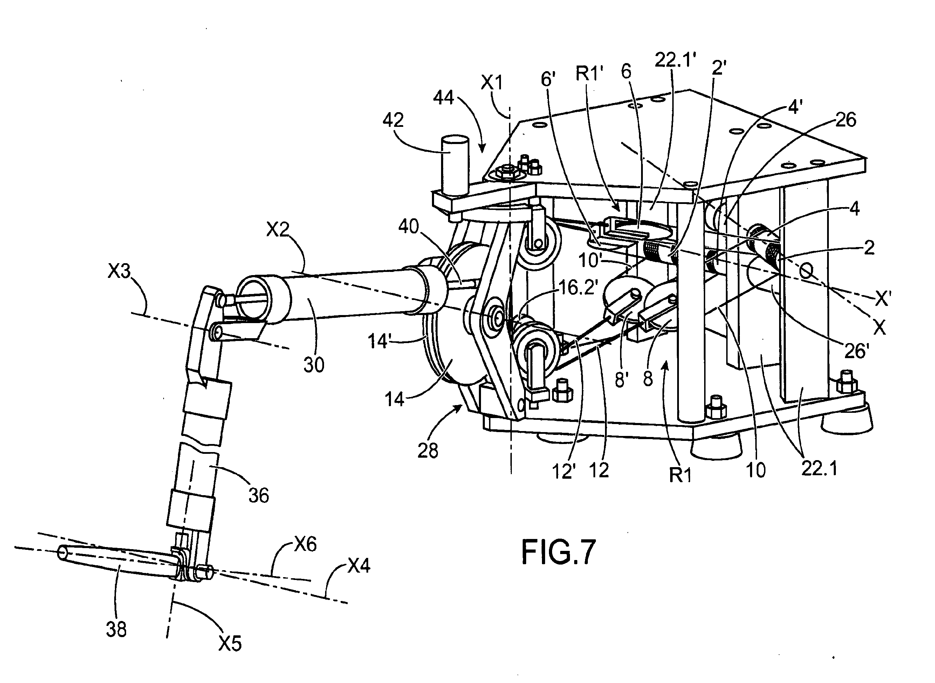

De manière avantageuse, l'axe X1 est disposé en arrière de l'axe X2, respectivement des axes X2 et X3 de la figure 7. Le dispositif est alors de réalisation plus simple et l'axe 1 peut être positionné à l'horizontal. En effet, du fait du rapport de réduction élevé qui peut être obtenu grâce au réducteur selon l'invention, la roue menée 14 peut être de faible diamètre. Les contrepoids peuvent être placés en dehors des secteurs menés et en arrière de l'axe X1, ce qui facilite son équilibrage. Il n'est alors plus nécessaire de le positionner à la verticale.

Sur la figure 7, on peut voir un exemple de réalisation d'un dispositif pouvant former un robot ou une interface haptique selon la présente invention.

Le dispositif de la figure 7 comporte un ensemble bras 30 et avant-bras 36. L'avant-bras 36 est articulé sur l'extrémité libre du bras 30 autour d'un axe X3. Le bras est, quant à lui, articulé autour de l'axe X2 et la chape 28 autour de l'axe X1.

Le dispositif de la figure 7 reprend la structure de la figure 4 qui est utilisée ici pour actionner l'avant-bras autour de l'axe X3, et à laquelle ont été ajoutés des moyens d'actionnement du bras autour de l'axe X2.

Dans l'exemple représenté, le déplacement de la roue 14' sur laquelle est fixée le bras 30 autour de l'axe X2 est obtenu par l'intermédiaire d'un réducteur R1' selon la présente invention, le déplacement de la roue 14 qui entraîne l'avant-bras 36 autour de l'axe X3 étant obtenu par l'intermédiaire d'un réducteur R1 semblable à celui de la figure 4.

Le deuxième réducteur R1' est de réalisation similaire au réducteur R1. Un montant supplémentaire 22.1' s'étendant entre la plaque inférieure et la plaque supérieure a été ajouté pour le montage des tambours du réducteur R1'. Le réducteur R1' comporte deux tambours 2', 4' solidaires en rotation montés entre le montant 22.1' et l'un des montants 22.1, entrainés par un moteur 26', en prise directe avec l'arbre de celui-ci. Le moteur 26' est équipé d'un capteur de position angulaire 26b' qui est caché par l'un des montants 22.1 sur la figure 7.

Le réducteur R1' comporte également deux réas 6', 8', deux poulies de renvoi dont une seule est visible 16.2', un câble 10' cheminant entre les tambours menants 2', 4' et les réas 6', 8' et un câble 12' cheminant à partir de la chape d'un des réas 6'vers une poulie de renvoi puis vers une roue menée 14', et de la roue menée 14' vers la seconde poulie de renvoi 16.2' puis vers la chape de l'autre réa 8'.

La roue menée 14' est disposée parallèlement à la roue menée 14 et montée en rotation autour de l'axe X2. Les rotations des deux poulies 14, 14' sont indépendantes. Par exemple, l'arbre de la roue menée 14 est creux et est traversé par l'arbre de la roue menée 14'. La roue menée 14' peut aussi par exemple être montée sur des paliers tournants sur l'arbre de la poulie 14, lui-même monté sur des paliers tournant sur la chape 28. L'arbre des roues 14 et 14' peut encore être commun et fixé à la chape 28, les deux roues 14 et 14' étant montées sur des paliers tournant autour de cet axe.

L'avant-bras est muni à son extrémité libre d'un moyen d'interaction 38 avec l'environnement extérieur, tel qu'une pince ou un outil dans le cas d'un robot, ou une poignée dans le cas d'une interface haptique.

Le déplacement en rotation de l'avant-bras 36 autour de l'axe X3 est transmis à la poulie 14 et inversement au moyen d'une bielle 40 traversant le tube 32 du bras 30.

La bielle 40 est articulée sur la roue menée 14 et sur une extrémité longitudinale de l'avant-bras 36 articulé sur le bras 30.

L'articulation de la bielle 40 sur la roue menée 14 est désaxée par rapport à l'axe X2.

L'ensemble constitué de la roue menée 14, de la bielle 40, de l'avant bras 36 et du bras 30 constitue ainsi une structure en parallélogramme bien connue de l'homme de l'art.

L'ensemble chape 28, bras 30, et avant-bras 36 est articulé sur le châssis 18 autour de l'axe X1, le déplacement en rotation de l'ensemble est réalisé dans l'exemple représenté par un moteur 42 équipé au besoin d'un capteur de position angulaire non représenté et par un réducteur à cabestan 44. Tout autre moyen de transmission des efforts du moteur 42 à la chape 28 pourrait bien sûr être utilisé, tel que par exemple et de manière non exhaustive un engrenage constitué d'une roue dentée en prise directe sur l'arbre moteur et d'une roue dentée fixée sur la chape 28, un train d'engrenages, des galets frottants ou encore une courroie.

Il est bien entendu qu'un réducteur selon la présente invention pourrait également être utilisé pour transmettre l'entraînement du moteur 42 à la chape 28 autour de l'axe X1. Dans ce cas on choisira avantageusement un dispositif tel que celui présenté sur la figure 1A.

Dans l'exemple représenté, l'élément d'interaction est de manière avantageuse mobile autour de trois axes X4, X5 et X6, et le dispositif ainsi obtenu offre six degrés de libertés. Dans ce cas, on pourra avantageusement équiper les rotations autour des axes X4, X5, X6 à l'aide de capteurs de position angulaire, afin de pouvoir mesurer les mouvements de l'effecteur suivant ces 6 degrés de liberté. On pourra également équiper ces 3 rotations de moteurs d'actionnement ou de retour d'effort.

Il est également possible d'associer deux dispositifs de la figure 7 en parallèle, l'élément d'interaction 38 étant porté par les extrémités libres des deux ensembles bras et avant-bras, les mobilités autour des axes X4 et X5 et d'au moins un des axes X6 étant conservées. Dans ce cas, un moteur en série pourra être ajouté au niveau de l'élément d'interaction pour offrir six degrés de liberté.

Il est encore possible d'associer trois dispositifs de la figure 7 en parallèle. Dans ce cas, on pourra conserver trois axes actionnés sur chacune des branches ou alors seulement deux.

Le dispositif de la figure 7 ou un ensemble composé de deux dispositifs de la figure 7 associés en parallèle est particulièrement adapté comme bras maître de télé-chirurgie ou comme interface haptique pour un simulateur ou un dispositif de formation ou d'entrainement à la chirurgie, en particulier la chirurgie maxillo-faciale. En effet un tel système requiert pour utiliser de manière optimale l'interface haptique que la poignée soit inclinée pour tomber naturellement sous la main au centre de l'espace de travail du robot. Cette contrainte requiert en général que le ou les axes X1 du ou des robots soient inclinés et pas à la verticale, ce qui est désormais possible grâce à l'invention du fait de la disposition des contrepoids par rapport à l'axe X1.

Il est bien entendu que les tambours des réducteurs R1, R1' des figures 4, 5A à 5D et 7 pourraient être désolidarisés suivant le principe illustré sur les figures 9A à 9F et 10 et synchronisés avec un rapport de synchronisation fixe égal à 1 ou -1 ou différent de 1 et -1 ou variable et avantageusement piloté.

Il est également entendu que les câbles menants 10, 10' et les tambours spiralés 2, 4, 2', 4' des réducteurs R1, R1' des figures 4, 5A à 5D et 7 pourraient être remplacés par des courroies et des tambours rainurés suivant les principes illustrés sur les figures 11A et 11B.

Le système d'actionnement selon la présente invention présente les avantages suivants :

- il est réversible, ce qui n'est pas le cas par exemple d'un réducteur à pignon et vis sans fin,
- il offre une grande transparence et une bonne dynamique, puisqu'il présente peu d'inertie et que les frottements sont réduits, ce que n'offrent pas des réducteurs à engrenages et les trains épicycloïdaux, ni le système « Harmonie Drive »,
- il est de mise en oeuvre simple contrairement aux trains épicycloïdaux,
- il permet d'atteindre des rapports de réduction plus élevés qu'un réducteur à courroies,
- il permet d'atteindre des rapports de réduction plus élevés qu'un réducteur à moufle, tout en étant de réalisation plus simple, et qu'un réducteur à cabestans d'un encombrement réduit,
- sa réalisation est simple et met en oeuvre des éléments classiques et robustes.

Le système d'actionnement selon la présente invention peut être appliqué à toute interface haptique, et à tout robot ou machine, et en particulier à toute interface haptique et à tout robot ou robot collaboratif nécessitant une transmission mécanique à fort rapport de réduction ayant un grand rendement.

De manière particulièrement intéressante, le système d'actionnement selon l'invention peut être utilisé pour la réalisation d'une interface haptique pour la formation aux gestes chirurgicaux.

## Revendications

1. Système d'actionnement en rotation, comportant:

> - au moins un moteur électrique (M, 26, 26'), et
> - au moins un réducteur comportant deux tambours menants (2, 4, 2',4', 102, 104), deux réas (6, 8, 6', 8', 106, 108) montés chacun dans une chape (Cl, C2), au moins un câble menant ou une courroie (10, 10', 110, 110') cheminant d'un premier tambour menant (2, 2', 102) à un réa (6, 6', 106), dudit réa (6, 6', 106) au deuxième tambour menant (4, 4', 104), dudit deuxième tambour menant (4, 4', 104) à l'autre réa (8, 8', 108) et dudit autre réa (8, 8', 108) au premier tambour menant (2, 2', 102), un câble mené (12, 12') dont un brin chemine de la chape (C1) d'un des réas (6, 6', 106) à une roue menée (14, 14') et un brin chemine de la roue menée (14, 14') à la chape (C2) de l'autre réa (8, 8', 108), les tambours menants (2, 4, 2', 4', 102, 104) ayant des diamètres différents et/ou des vitesses de rotation différentes de sorte que la rotation des tambours menants (2, 4, 2', 4', 102, 104) provoque une diminution, respectivement un accroissement de la distance entre l'un des réas (6, 8, 6', 8', 106, 108) et les tambours menants (2, 4, 2', 4', 102, 104) simultanément à un accroissement, respectivement une diminution de la distance entre l'autre des réas (8, 6, 8,' 6', 108, 106) et les tambours menants (2, 4, 2', 4', 102, 104), entraînant le câble mené (12, 12') et un déplacement en rotation de la roue menée (14, 14'),
>
> dans lequel les tambours menants (102, 104) ont des axes de rotation distincts, et dans lequel le réducteur comporte deux brins de câble menants ou deux brins de courroie menants (110, 110'), un brin de câble menant ou un brin de courroie menant (110) cheminant entre le premier tambour menant (102), le premier réa (106) et le deuxième tambour menant (104) et un brin de câble menant ou un brin de courroie menant (110') cheminant entre le premier tambour menant (102), le deuxième réa (108) et le deuxième tambour menant (104), et
> dans lequel le moteur est en prise directe ou via des moyens de transmission avec l'un des tambours menants et des moyens de transmission sont prévus entre les premier et deuxième tambours menants ou entre le moteur et le deuxième tambour menant, ledit système comportant également un contrôleur associé au moteur permettant de faire varier et pilotant le rapport de synchronisation entre les deux tambours.

2. Système selon la revendication 1, dans lequel l'élément menant est un câble (10, 10', 110, 110') et les tambours menants (2, 4, 2', 4', 102, 104) comportent un filetage pour guider le câble menant (10, 10', 110, 110').

3. Système selon la revendication 1, dans lequel l'élément menant est une courroie (110) et les tambours menants (102, 104) comportent une gorge pour guider la courroie (110).

4. Système selon la revendication 1, 2 ou 3, dans lequel le câble mené (12,12') est guidé par des poulies de renvoi (16.1, 16.2, 16.1', 16-2') de sorte à passer le long ou à proximité d'un axe de rotation (XI) autour duquel une chape (28) supportant la roue menée (14, 14') peut tourner.

5. Système d'actionnement selon l'une quelconque des revendications 1 à 4, dans lequel le ou les moteurs (M, M', 26, 26') sont pourvus de capteurs de position angulaire (S, S', 26b, 26b').

6. Robot ou interface haptique comportant au moins un système d'actionnement selon l'une des revendications 1 à 5 et des moyens de commandes des moteurs.

7. Robot ou interface haptique comportant au moins un système d'actionnement selon l'une des revendications 1 à 5, sur lequel on modifie à l'aide du contrôleur du robot le rapport de réduction en le diminuant à des moments donnés et en l'augmentant à d'autres moments donnés.

8. Robot ou interface haptique selon l'une des revendications 6 ou 7, comportant une chape (28) mobile en rotation autour d'un axe (XI), au moins un premier et un deuxième systèmes d'actionnement selon l'une des revendications 1 à 5, dans lequel les poulies menées (14, 14') sont coaxiales et montées mobiles en rotation dans la chape (28) autour d'un axe (X2) non parallèle à (X1), et comportant un bras (30) fixé sur la roue menée (14') solidaire en rotation de la roue menée (14') et un avant-bras (36) articulé sur le bras (30) autour d'un troisième axe (X3) parallèle à l'axe de rotation (X2), et dans lequel la roue menée (14) du premier système d'actionnement entraine l'avant-bras (36) par l'intermédiaire d'une bielle (40).

**Patentansprüche**

1. Drehbetätigungssystem, umfassend wenigstens einen Elektromotor (M, 26, 26') sowie wenigstens ein Reduktionsgetriebe, umfassend zwei Antriebstrommeln (2, 4, 2', 4', 102, 104), zwei Seilrollen (6, 8, 6', 8', 106, 108), die jeweils in einem Gabelkopf (C1, C2) montiert sind, wenigstens ein Kabel oder einen Riemen (10, 10', 110, 110'), das bzw. der von einer ersten Antriebstrommel (2, 2', 102) zu einer Seilrolle (6, 6', 106) führt bzw. verläuft, von der Seilrolle (6, 6', 106) zur zweiten Antriebstrommel (4, 4', 104), von der zweiten Antriebstrommel (4, 4', 104) zur anderen Seilrolle (8, 8', 108) und von der anderen Seilrolle (8, 8', 108) zur ersten Antriebstrommel (2, 2', 102), ein angetriebenes Kabel (12, 12'), von dem ein Trum von dem Gabelkopf (C1) einer der Seilrollen (6, 6', 106) zu einem angetriebenen Rad (14, 14') verläuft und ein Trum von dem angetriebenen Rad (14, 14') zum Gabelkopf (C2) der anderen Seilrolle (8, 8', 108) verläuft, wobei die Antriebstrommeln (2, 4, 2', 4', 102, 104) unterschiedliche Durchmesser und /oder unterschiedliche Drehgeschwindigkeiten derart aufweisen, dass die Drehung der Antriebstrommeln (2, 4, 2', 4', 102, 104) eine Abnahme bzw. eine Zunahme des Abstands zwischen einer der Seilrollen (6, 8, 6', 8', 106, 108) und den Antriebstrommeln (2, 4, 2', 4', 102, 104) gleichzeitig mit einer Zunahme bzw. Abnahme des Abstands zwischen der anderen der Seilrollen (8, 6, 8', 6', 108, 106) und den Antriebstrommeln (2, 4, 2', 4', 102, 104) bewirkt, was das angetriebene Kabel (12, 12') antreibt und eine Drehverlagerung des angetriebenen Rads (14, 14') verursacht,
wobei die Antriebstrommeln (102, 104) unterschiedliche Drehachsen haben, und wobei das Reduktionsgetriebe zwei Trumme des antreibenden Kabels oder zwei Trumme des antreibenden Riemens (110, 110') umfasst, wobei ein Trum des antreibenden Kabels oder ein Trum des antreibenden Riemens (110) zwischen der ersten Antriebstrommel (102), der ersten Seilrolle (106) und der zweiten Antriebstrommel (104) verläuft, und ein Trum des antreibenden Kabels oder ein Trum des antreibenden Riemens (110') zwischen der ersten Antriebstrommel (102), der zweiten Seilrolle (108) und der zweiten Antriebstrommel (104) verläuft,
und wobei der Motor direkt oder mittels Übertragungsmitteln in Eingriff mit einer der Antriebstrommeln ist, und Übertragungsmittel zwischen der ersten und zweiten Antriebstrommel oder zwischen dem Motor und der zweiten Antriebstrommel vorgesehen sind,
wobei das System ferner einen Controller umfasst, welcher dem Motor zugeordnet ist und es ermöglicht, das Synchronisationsverhältnis zwischen den zwei Trommeln zu variieren und zu steuern.

2. System nach Anspruch 1, wobei das antreibende Element ein Kabel (10, 10', 110, 110') ist, und die Antriebstrommeln (2, 4, 2', 4', 102, 104) ein Gewinde zum Führen des antreibenden Kabels (10, 10', 110, 110') umfassen.

3. System nach Anspruch 1, wobei das antreibende Element ein Riemen (110) ist, und wobei die Antriebstrommeln (102 ,104) eine Rille zur Führung des Riemens (110) umfassen.

4. System nach Anspruch 1, 2 oder 3, wobei das angetriebene Kabel (12, 12') durch Umlenkrollen (16.1, 16.2, 16.1', 16.2') derart geführt wird, dass es entlang oder nahe einer Drehachse (XI) verläuft, um die ein Gabelkopf (28), der das angetriebene Rad (14, 14') trägt, sich drehen kann.

5. Betätigungssystem nach einem der Ansprüche 1 bis 4, wobei der oder die Motoren (M, M', 26, 26') mit Winkelpositionssensoren (S, S', 26b, 26b') ausgestattet sind.

6. Roboter oder haptische Schnittstelle, umfassend wenigstens ein Betätigungssystem nach einem der Ansprüche 1 bis 5 sowie Mittel zur Steuerung der Motoren.

7. Roboter oder haptische Schnittstelle, umfassend wenigstens ein Betätigungssystem nach einem der Ansprüche 1 bis 5, bei dem das Reduktionsverhältnis mit Hilfe des Controllers des Roboters modifiziert wird, indem das Reduktionsverhältnis zu gegebenen Zeitpunkten verringert wird und das Reduktionsverhältnis zu anderen gegebenen Zeitpunkten erhöht.

8. Roboter oder haptische Schnittstelle nach einem der Ansprüche 6 oder 7, umfassend einen Gabelkopf (28), der um eine Achse (XI) drehbeweglich ist, wenigstens ein erstes und ein zweites Betätigungssystem nach einem der Ansprüche 1 bis 5, wobei die angetriebenen Rollen (14, 14') coaxial und drehbeweglich um eine Achse (X2), die nicht parallel zu (X1) ist, in dem Gabelkopf (28) montiert sind, und umfassend einen Arm (30), der an dem angetriebenen Rad (14') drehverbunden mit dem angetriebenen Rad (14') befestigt ist sowie einen Auslegerarm (36), der an dem Arm (30) um eine dritte Achse (X3) parallel zur Drehachse (X2) angelenkt ist, und wobei das angetriebenen Rad (14) des ersten Betätigungssystems den Auslegerarm (36) mittels einer Stange (40) antreibt.

**Claims**

1. Rotational actuating system comprising:

- at least one electrical motor (M, 26, 26'),
- at least one reducing device comprising two driving drums (2, 4, 2', 4', 102, 104), two sheave wheels (6, 8, 6', 8', 106, 108) each mounted in a yolk (C1, C2), at least one driving cable or a belt (10, 10', 110, 110') travelling from a first driving drum (2, 2' , 102) to a sheave wheel (6, 6' , 106), from said sheave wheel (6, 6', 106) to the second driving drum (4, 4', 104), from said second driving drum (4, 4', 104) to the other sheave wheel (8, 8', 108) and from said other sheave wheel (8, 8', 108) to the first driving drum (2, 2', 102), a driven cable (12, 12'), one strand of which travels from the yolk (C1) of one of the sheave wheels (6, 6', 106) to a driven wheel (14, 14') and one strand travels from the driven wheel (14, 14') to the yolk (C2) of the other sheave wheel (8, 8', 108), the driving drums (2, 4, 2', 4', 102, 104) having different diameters and/or different rotation speeds so that the rotation of the driving drums (2, 4, 2', 4', 102, 104) causes a reduction, respectively an increase, in the distance between one of the sheave wheels (6, 8, 6', 8', 106, 108) and the driving drums (2, 4, 2', 4', 102, 104) simultaneously to an increase, respectively reduction, in the distance between the other sheave wheels (8, 6, 8,' 6', 108, 106) and the driving drums (2, 4, 2', 4', 102, 104), driving the driven cable (12, 12') and a rotation movement of the driven wheel (14, 14'),

wherein the driving drums (102, 104) have separate rotation axes, and wherein the reducing device comprises two strands of driving cables or two strands of driving belt (110, 110'), one strand of driving cable (110) travelling between the first driving drum (102), the first sheave wheel (106) and the second driving drum (104) and one strand of driving cable (110') travelling between the first driving drum (102), the second sheave wheel (108) and the second driving drum (104), and
wherein the motor is in direct drive or via transmission means with one of the driving drums and the transmission means are provided between the first and second driving drums or between the motor and the second driving drum,
said system comprising a controller associated with the motor, making it possible to vary and control the synchronisation ratio between the two drums.

2. System according to claim 1, wherein the driving element is a cable (10, 10', 110, 110') and the driving drums (2, 4, 2', 4', 102, 104) comprise a thread to guide the driving cable (10, 10', 110, 110').

3. Reducing device according to claim 1, wherein the driving element is a belt (110) and the driving drums (102, 104) comprise a groove for guiding the belt (110).

4. System according to one of claims 1 to 3, wherein the driven cable (12, 12') is guided by return pulleys (16.1, 16.2, 16.1', 16.2') so as to pass along or near to an axis of rotation (X1) around which a yolk (28) supporting the driven wheel (14, 14') can turn.

5. Actuating system according to any of claims 1 to 4, wherein the motor (s) (M, M', 26, 26') are provided with angular position sensors (S, S', 26b, 26b').

6. Robot or haptic interface comprising at least one actuating system according to one of claims 1 to 5 and motor command means.

7. Robot or haptic interface comprising at least one actuating system according to one of claims 1 to 5, on which, by means of the controller of the robot, the reduction ratio is modified by reducing it at given moments, and by increasing it at other given moments.

8. Robot or haptic interface according to claims 6 or 7, comprising a yolk (28) which is able to rotate around an axis (X1), at least a first and a second actuating systems according to one of claims 1 to 5, in which the driven wheels (14, 14') are coaxial and are mounted able to rotate in the yolk (28) around an axis (X2) which is non parallel to (X1), and comprising a arm (30) fixed to the driven wheel (14') secured in rotation to the driven wheel (14') and a forearm (36) hinged on the arm (30) around a third axis (X3) parallel to the rotation axis (X2), and in which the driven wheel (14) of the first actuating system drives the forearm (36) through a link (40).

FIG.1A

FIG.1B

FIG.2A

FIG.2B

EP 2 582 494 B1

FIG.3A

EP 2 582 494 B1

FIG.3B

FIG.4

EP 2 582 494 B1

FIG.5A

FIG.5B

FIG.5C

EP 2 582 494 B1

FIG.5D

FIG.6

FIG.7

EP 2 582 494 B1

FIG.8

FIG.9A

104

110'

108

X"

110

106

102

X'

## FIG.9B

110'

104

108

X"

110

106

X'

102

## FIG.9C

FIG.9D

FIG.9E

FIG.9F

FIG.10

FIG.11A

FIG.11B

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5207144 A